# FASCICULE DE BREVET EUROPEEN

(11) **EP 2 684 798 B1**
(45) Date de publication et mention de la délivrance du brevet: **08.10.2014**
(21) Numéro de dépôt: 13003322.8
(22) Date de dépôt: 01.07.2013
(51) Int. Cl.: B64C 27/04, B64D 27/24, B64C 27/12, B64D 27/02

(54) **Architecture d'alimentation hybride en puissance mécanique d'un rotor, gérée à partir du réseau de bord d'un giravion**
Aufbau einer Hybridversorgung mit der mechanischen Leistung eines Rotors, die vom Bordnetz eines Drehflügelflugzeugs aus gesteuert wird
Hybrid distribution architecture of mechanical power of a rotor, managed from the on-board network of a rotorcraft

(30) Priorité: 12.07.2012 FR 1201974
(43) Date de publication de la demande: 15.01.2014
(73) Titulaire: Airbus Helicopters, 13725 Marignane Cedex (FR)
(72) Inventeur: Roggemans, Emmanuelle, 13480 Cabries (FR); Logeais, Jean-François, 13009 Marseille (FR)
(74) Mandataire: GPI & Associés

(56) Documents cités:
- EP-A2- 2 404 775
- FR-A1- 2 961 767
- US-A1- 2009 145 998

## Description

La présente invention est du domaine des équipements pour aéronef à voilure tournante, hélicoptère notamment, relatifs à l'alimentation en énergie d'organes équipant le giravion. Les dits organes sont plus particulièrement des organes de puissance tels qu'au moins un groupe de motorisation d'entraînement en rotation d'un rotor, et des accessoires et/ou des équipements utiles au fonctionnement du giravion.

La présente invention relève plus spécifiquement des architectures d'alimentation en puissance mécanique par énergie hybride d'un rotor équipant un hélicoptère ou aéronef à voilure tournante analogue, et de gestion de cette alimentation par un réseau de bord électrique du giravion.

La notion d'énergie hybride est à considérer au regard d'une exploitation sélective d'une source d'énergie à combustion et/ou d'une source d'énergie électrique. La source d'énergie à combustion met notamment en oeuvre un turbomoteur ou un moteur à combustion interne de type moteur diesel, et la source d'énergie électrique met notamment en oeuvre une machine électrique réversible, génératrice-démarreur plus particulièrement.

Les notions de turbomoteur, de moteur à combustion interne, de machine électrique réversible et de génératrice-démarreur ne doivent pas être considérées au sens strict mais au regard de leur fonction et de leurs modalités de mise en oeuvre. Plus particulièrement, le turbomoteur, le moteur à combustion interne et la machine électrique réversible, génératrice-démarreur notamment, sont susceptibles d'être remplacés par des organes de fonctions et de modalités de mise en oeuvre notoirement admises comme analogues.

Les hélicoptères sont des aéronefs à voilure tournante comprenant au moins un rotor entraîné en rotation par au moins un groupe de motorisation. Il est plus particulièrement à considérer dans le cadre de la présente invention un groupe de motorisation hybride associant un moteur à combustion et un moteur électrique, machine électrique réversible notamment.

Le rotor est susceptible d'être un rotor principal procurant au giravion sa sustentation, voire aussi sa propulsion dans le cadre d'un hélicoptère. Le rotor est aussi susceptible d'être un rotor secondaire tel qu'un rotor de queue procurant le guidage du giravion autour de l'axe de lacet, ou encore d'être une hélice propulsive dans le cadre d'un giravion rapide à long rayon d'action, traditionnellement désigné par hélicoptère hybride.

Le rotor est communément entraîné en rotation par un groupe de motorisation, comprenant au moins un moteur à combustion d'entraînement d'une boîte de transmission de puissance en prise mécanique sur le rotor. Selon diverses variantes liées essentiellement à la puissance du giravion et à une réglementation relative au survol autorisé de territoires, le giravion est susceptible d'être monomoteur ou d'être équipé de plusieurs moteurs, tel que pour un giravion bimoteur notamment. Traditionnellement, un giravion monomoteur est équipé d'un turbomoteur voire d'un moteur à combustion interne, moteur diesel notamment, et un giravion bimoteur est équipé de deux turbomoteurs. Chaque turbomoteur associe un générateur de gaz en prise sur une turbine libre d'entraînement en rotation de la boîte de transmission de puissance.

La boîte de transmission de puissance est aussi susceptible d'être exploitée pour l'entraînement mécanique d'équipements principaux du giravion, nécessitant une puissance de fonctionnement conséquente, telle que par exemple une pompe ou un compresseur d'un dispositif de ventilation, de chauffage et/ou de climatisation. De tels équipements principaux comprennent un organe de puissance secondaire mécaniquement entraîné par la boîte de transmission de puissance.

Par ailleurs, le giravion est équipé d'un réseau de bord électrique, pour l'alimentation en énergie électrique des divers équipements et/ou d'accessoires du giravion. Les accessoires nécessitent pour leur fonctionnement un apport d'énergie d'une puissance considérée comme modérée au regard de la puissance mécanique à fournir pour l'entraînement du rotor, et plus particulièrement pour l'entraînement de la boîte de transmission de puissance. De tels accessoires du giravion à puissance modérée sont traditionnellement alimentés pour leur fonctionnement en énergie électrique à partir du réseau de bord électrique.

Les accessoires sont par exemple des accessoires de planche de bord et/ou des accessoires de confort, une instrumentation de bord fournissant des informations relatives au fonctionnement et/ou à l'environnement du giravion, ou encore sont des accessoires de calcul régulant le fonctionnement du giravion. Il est à relever que parmi les accessoires sont compris des organes de sécurisation du fonctionnement du giravion et/ou des organes de sécurité vis-à-vis des personnes, ou encore des organes jugés indispensables au pilote pour guider le giravion en toute sécurité à partir d'une Interface Homme-Machine (IHM).

Le réseau de bord est en relation avec diverses sources d'énergie électrique, telles qu'une machine électrique réversible, un générateur de courant électrique et/ou une réserve d'énergie électrique. Le réseau de bord comporte une ou plusieurs unités centrales régulant la distribution des flux électriques vers les divers accessoires et équipements du giravion à alimenter en énergie électrique, voire encore vers des organes de puissance tels qu'une dite machine électrique réversible susceptible d'être exploitée pour l'entraînement temporaire du moteur à combustion.

Il est opportun de veiller à la sécurisation du fonctionnement du giravion vis-à-vis de l'énergie électrique disponible. Par exemple selon le document FR 2 961 767 (SAGEM DEFENSE SECURITE), il est proposé d'interrompre le rechargement en énergie électrique d'une réserve d'énergie affectée à l'alimentation en énergie électrique d'un accessoire d'un giravion, dans le cas où un moteur à combustion du giravion est en fonctionnement et que ladite réserve d'énergie est à un seuil de charge prédéfini.

Les unités centrales comportent à cet effet des interfaces de connexion (BUS) en relation avec divers organes de commutation, tels que des contacteurs ou organes analogues de commutation. Les ressources en énergie électrique du giravion sont gérées par les unités centrales qui régulent les flux d'énergie électrique circulant à travers le réseau de bord.

En fonction des besoins, les unités centrales régulent l'alimentation en énergie électrique du réseau de bord électrique et la distribution de cette énergie électrique vers un réseau de distribution électrique, à partir duquel sont alimentés des réseaux auxiliaires électriques d'alimentation en énergie électrique des accessoires et équipements du giravion.

Le réseau de bord électrique est une installation sensible du giravion, dont la constance d'alimentation en énergie électrique et dont la puissance disponible ne doivent pas être négligées. En effet, il est nécessaire de pouvoir obtenir une alimentation électrique adéquate des divers équipements et accessoires du giravion, quelles que soient les situations de vol et/ou les phases de vol du giravion.

Les situations de vol correspondent notamment à une situation de démarrage ou d'arrêt du rotor, à une situation de vol stationnaire et/ou à basses vitesses réputées correspondre à une progression du giravion inférieure à 40 kt, ou encore à une situation de vol de croisière dans laquelle la motorisation de l'aéronef est exploitée à un régime nominal. Les phases de vol correspondent à un changement de régime de la motorisation, tel qu'en phase de démarrage ou d'arrêt de la motorisation, et notamment en phases transitoires d'accélération ou de décélération de la motorisation.

Traditionnellement, une machine électrique génératrice de courant est intégrée au groupe de motorisation, pour son entraînement en rotation à partir du moteur à combustion. La machine électrique fournit du courant électrique au réseau de bord, et est exploitée pour alimenter une réserve d'énergie électrique permettant au besoin d'alimenter en énergie le réseau de bord.

Dans ces conditions, l'évolution des techniques et des besoins a conduit à organiser l'architecture d'alimentation en puissance mécanique du rotor à partir de divers sources d'énergie associant un moteur à combustion et une machine électrique réversible. De telles architectures sont communément désignées par architecture de motorisation hybride.

En complément de l'apport d'énergie mécanique fournie au rotor par le moteur à combustion, la machine électrique réversible est exploitée comme un organe moteur procurant temporairement un appoint d'énergie mécanique dans des situations de vol et/ou des phases de vol spécifiques du giravion. La machine électrique réversible est par exemple exploitée au démarrage du giravion pour initier l'entraînement du moteur à combustion. Par exemple encore, un montage de la machine électrique réversible en prise sur la chaîne cinématique à partir de laquelle est entraîné le rotor, est potentiellement exploité pour assister le moteur à combustion dans une phase d'accélération, ou inversement dans une phase de décélération.

Par exemple selon le document US2009/0145998 (SALYER IVAL O.), un turbomoteur fournit l'énergie mécanique couramment nécessaire au rotor en situation de vol de croisière. Un moteur électrique est exploité pour l'entraînement du rotor selon des conditions de vol prédéterminées. Le moteur électrique est susceptible d'être alimentée en énergie électrique par le réseau de bord à partir d'une réserve d'énergie électrique, ou à partir d'un générateur électrique entraîné mécaniquement par un turbomoteur.

Par exemple encore selon le document US7513120 (UNITED TECH. CORP.), des machines électriques sont en prise mécanique sur un turbomoteur, l'une par l'intermédiaire du générateur de gaz et l'autre par l'intermédiaire de la turbine libre. L'efficacité et les performances du générateur de gaz sont améliorées en phases de vol transitoires de fonctionnement du turbomoteur.

On pourra aussi se reporter au document FR2929324 (TURBOMECA SA), selon lequel une machine électrique réversible est sélectivement en prise mécanique sur le générateur de gaz pour le démarrage du turbomoteur, ou sur la turbine libre pour son entraînement en mode de génération d'énergie électrique.

Le document FR2914697 (TUBOMECA SA) propose une architecture de motorisation hybride pour giravion, selon laquelle l'énergie électrique est exploitée en phases de vol transitoires, notamment en phase d'accélération ou de décélération.

Dans ce cas, un moteur auxiliaire électrique est en prise sur le générateur de gaz d'un turbomoteur d'entraînement du rotor, pour l'assister en phase d'accélération. Le moteur auxiliaire est alimenté en énergie électrique à partir d'une réserve d'énergie électrique ou à partir d'un premier générateur électrique. Le premier générateur électrique est susceptible d'être entraîné par la turbine libre du turbomoteur, ou par la chaîne de transmission mécanique à partir de laquelle est entraîné le rotor.

Un deuxième générateur électrique est en prise sur le générateur de gaz, pour prélever de l'énergie mécanique en phase de décélération et transformer cette énergie mécanique prélevée en énergie électrique. Le deuxième générateur électrique alimente en énergie électrique une réserve d'énergie électrique lorsqu'il est entraîné par le générateur de gaz. Toujours au regard de la décélération, le moteur auxiliaire est susceptible d'être une machine électrique réversible exploitée pour prélever de l'énergie mécanique à partir du générateur de gaz.

Un problème posé réside dans la conciliation entre la fourniture en énergie mécanique d'appoint par une machine électrique réversible pour l'entraînement du rotor, et le fonctionnement sécurisé du réseau de bord au regard des besoins en énergie électrique du giravion. Il est aussi à prendre en compte une faculté de l'architecture de motorisation hybride à pouvoir être implantée sans modification structurelle majeure sur un quelconque type de giravion, notamment sur un giravion monomoteur ou sur un giravion bimoteur.

Une telle problématique est abordée dans le document FR2962404 (EUROCOPTER), qui divulgue une architecture de motorisation hybride équipant un giravion. Une solution proposée par ce document est notamment de faire une distinction entre le réseau de bord fonctionnant sous une tension électrique nominale, et un réseau électrique auxiliaire spécifiquement réservé à la machine électrique réversible fonctionnant sous une tension électrique auxiliaire propre.

Il est opportun que l'exploitation de la machine électrique pour l'entraînement mécanique du rotor soit optimisée. Une telle recherche relève notamment de la possibilité d'exploiter une machine électrique réversible au mieux de ses capacités, quelle que soit les situations de vol et/ou les phases de vol transitoires du giravion.

Plus précisément, la machine électrique réversible doit pouvoir être exploitée quelle que soit la situation de vol du giravion, considérée depuis la phase de démarrage du rotor jusqu'à une situation de vol de croisière et inversement, en incluant les situations de vol critiques d'une progression du giravion en vol stationnaire et/ou à basses vitesses.

La machine électrique réversible doit notamment pouvoir être exploitée en phases transitoires de vol, dans lesquelles le moteur à combustion doit être mécaniquement assisté par la machine électrique réversible pour l'entraînement du rotor en cas d'accélération.

Plus particulièrement en phase d'accélération, il est opportun de fournir de l'énergie mécanique d'appoint à partir de la machine électrique réversible pour l'entraînement du rotor. Plus particulièrement encore en phase de décélération, il est opportun d'exploiter la machine électrique réversible et/ou un générateur de courant électrique pour prélever de l'énergie mécanique à partir de la chaîne cinématique d'entraînement du rotor en rotation.

De tels avantages procurés par l'architecture de motorisation hybride doivent être obtenus sans affecter le fonctionnement du réseau de bord du giravion. Il est donc encore opportun de garantir la fiabilité et le fonctionnement sécurisé du réseau de bord. Les ressources en énergie électrique du réseau de bord doivent être maintenues disponibles et suffisantes quels que soient les besoins immédiats du giravion, sans affecter la sécurisation de son fonctionnement.

Une quantité d'énergie électrique doit être maintenue disponible pour le fonctionnement sécurisé des divers équipements et accessoires du giravion. La disponibilité de cette quantité d'énergie électrique ne doit pas être obtenue au détriment d'une recherche de simplification de l'architecture de motorisation hybride, et doit prendre en compte les besoins en énergie électrique des nombreux équipements et accessoires dont le giravion est susceptible d'être équipé. Il doit aussi être privilégié, pour un profil de mission donné du giravion, d'éviter une déperdition d'énergie.

Il doit encore être pris en compte une implantation souhaitable sans modification structurelle majeure de l'architecture de motorisation hybride sur un quelconque type de giravion, notamment quel que soit le nombre de moteurs à combustion dont le giravion est susceptible d'être équipé et quelle que soit la structure du moteur à combustion exploité pour l'entraînement du rotor, moteur à combustion interne ou turbomoteur notamment.

Par conséquent, il apparaît qu'il n'est pas aisé de concevoir une architecture d'alimentation en puissance mécanique par énergie hybride d'un rotor de giravion, prenant en compte l'ensemble des contraintes énoncées.

Le but de la présente invention est de proposer une architecture d'alimentation en puissance mécanique par énergie hybride d'un rotor de giravion, associant au moins un moteur à combustion et au moins une machine électrique réversible, dont l'organisation procure une solution satisfaisante au regard de l'ensemble des contraintes précédemment énoncées.

Il est plus particulièrement recherché par la présente invention une telle architecture incluant des modalités d'organisation et de fonctionnement du réseau de bord électrique du giravion, qui permettent d'exploiter avec satisfaction une motorisation de puissance hybride du giravion performante, sans affecter l'exploitation sécurisée du réseau de bord au regard des exigences de fonctionnement et de conditions de vol sécurisé dont relèvent les giravions.

Il est encore plus particulièrement recherché par la présente invention une telle architecture qui soit de structure simple en évitant d'induire une charge excessive du giravion, et en permettant son implantation sans modification structurelle majeure sur un quelconque type de giravion.

L'architecture de la présente invention est une architecture d'alimentation en puissance mécanique par énergie hybride d'un rotor de giravion. Une telle architecture associe au moins un moteur à combustion équipé de moyens de régulation de son fonctionnement, avec au moins une machine électrique réversible équipée de moyens de régulation de son fonctionnement.

Plus précisément, ladite architecture comporte une chaîne cinématique d'entraînement du rotor depuis au moins un groupe de motorisation comprenant un dit moteur à combustion en prise avec au moins une dite machine électrique réversible. La chaîne cinématique comprend une boîte de transmission de puissance en prise sur le moteur à combustion pour son entraînement. La boîte de transmission de puissance est en prise sur le rotor pour son entraînement, notamment par l'intermédiaire de moyens de transmission mécanique.

Au moins une réserve d'énergie électrique, accessoirement équipée de moyens de régulation de son fonctionnement, est alimentée en énergie électrique à partir de la machine électrique réversible et à partir d'au moins un générateur de courant électrique équipé de moyens de régulation de son fonctionnement. Le générateur de courant électrique est entraîné en rotation à partir de la chaîne cinématique, et de préférence à partir de la boîte de transmission de puissance sans exclure la possibilité d'une mise en prise du générateur de courant électrique en un quelconque point de prise sur la chaîne cinématique d'entraînement du rotor depuis la boîte de transmission de puissance.

Un réseau de bord électrique du giravion collecte et distribue de l'énergie électrique depuis des sources d'énergie électrique, comprenant au moins une dite machine électrique réversible, au moins un dit générateur de courant électrique et au moins une dite réserve d'énergie électrique. Le réseau de bord comprend un réseau de distribution électrique dédié à l'approvisionnement en énergie électrique d'équipements du giravion qui sont accessoirement munis de moyens de régulation de leur fonctionnement.

Une interface homme-machine (IHM) est associée à des moyens de calcul de commande. Un pilote agit sur des organes du giravion par l'intermédiaire de l'interface homme-machine, pour modifier le fonctionnement des dits organes du giravion, qui comprennent au moins le groupe de motorisation et les dits équipements à approvisionner en énergie électrique.

Selon la présente invention, le réseau de bord comprend un réseau de gestion distinct du réseau de distribution électrique et interposé entre les sources d'énergie électrique et le réseau de distribution électrique. Il est à considérer que le réseau de bord comprend une architecture de distribution électrique incluant le réseau de gestion, un calculateur de gestion et les dites sources d'énergie électriques équipant le giravion, notamment au moins une machine électrique réversible, au moins un générateur de courant et au moins une réserve d'énergie. La mise en oeuvre du réseau de gestion est placée sous la dépendance du dit calculateur de gestion, qui est en relation avec des interfaces de communication émettrices d'informations de gestion. A partir des informations de gestion, le calculateur de gestion met en oeuvre le réseau de gestion en distribuant sélectivement l'énergie électrique fournie par les sources d'énergie électrique à travers le réseau de gestion et vers le réseau de distribution depuis le réseau de gestion.

Plus particulièrement, le réseau de gestion est mis en oeuvre par au moins un calculateur de gestion, qui régule des alimentations respectives en énergie électrique à travers le réseau de gestion et depuis le réseau de gestion vers le réseau de distribution électrique. Le calculateur de gestion régule aussi les alimentations respectives en énergie électrique des sources d'énergie électrique en phase d'approvisionnement en énergie électrique, telles qu'au moins une dite machine électrique réversible et au moins une dite réserve d'énergie électrique.

Le calculateur de gestion opère la dite régulation des alimentations en énergie électrique selon des informations de gestion convergeant vers le calculateur de gestion. Les dites informations de gestion sont notamment relatives au fonctionnement du moteur à combustion, au fonctionnement des sources d'énergie électrique et au besoin en énergie électrique du réseau de distribution électrique.

Les informations de gestion sont notamment fournies au calculateur de gestion par des interfaces de communication, respectivement interface de communication externe et interface de communication interne, selon les modalités préférées suivantes :
-) le calculateur de gestion est en communication par l'interface de communication externe au moins avec l'interface homme machine IHM, avec les moyens de régulation du moteur à combustion générateurs d'informations de commande, et avec des moyens d'évaluation des besoins en énergie électrique des équipements. Lesdits moyens d'évaluation des besoins sont générateurs d'informations de restriction relatives aux besoins en énergie électrique des équipements alimentés en énergie électrique à partir du réseau de distribution. De tels moyens d'évaluation des besoins sont susceptibles de comprendre de dits moyens de régulation dont les équipements sont potentiellement équipés, et/ou par exemple des moyens de mesure de la tension électrique du réseau de distribution révélatrice des dits besoins à évaluer, ou autres moyens analogues aptes à évaluer les besoins en énergie électrique du réseau de distribution pour alimenter les équipements en énergie électrique.
-) le calculateur de gestion est en communication par l'interface de communication interne au moins avec les moyens de régulation du générateur de courant électrique, avec au moins les moyens de régulation de la machine électrique réversible, sinon aussi le cas échéant avec des dits moyens de régulation du fonctionnement de la réserve d'énergie électrique dont elle est accessoirement mais préférentiellement équipée. Les sources d'énergie électrique sont génératrices d'informations de disponibilité de ressource en énergie électrique susceptibles de répondre aux potentiels besoins du giravion.

A partir des informations de commande relatives à la situation de vol et aux phases de vol du giravion, à partir d'informations de restriction notamment relatives aux besoins en énergie électrique du réseau de distribution pour l'alimentation en énergie électrique des équipements, et à partir des informations de disponibilité de ressource en énergie électrique, le calculateur de gestion est avantageusement régi selon les modes de régulation suivants :
-) en situation de démarrage du rotor, le calculateur de gestion est générateur d'ordres de commande prioritairement d'un entraînement du moteur à combustion par la machine électrique réversible, qui est alimentée en énergie électrique à partir de la réserve d'énergie électrique. Le réseau de gestion est alimenté à partir de la réserve d'énergie électrique, si besoin soutenue sinon substituée par une alimentation électrique au sol extérieure au giravion.
-) en situation de vol de croisière, le calculateur de gestion, sous dépendance des informations de disponibilité et des informations de restriction, est générateur d'ordres de commande d'une alimentation en énergie électrique prioritairement du réseau de distribution et secondairement de la réserve d'énergie électrique. Une telle alimentation en énergie électrique est avantageusement fournie à partir de la machine électrique réversible et à partir du générateur de courant qui sont entraînés par le moteur à combustion. La réserve d'énergie électrique est alors avantageusement exploitée pour filtrer l'énergie électrique circulant dans le réseau de bord.
-) en phase d'accélération du moteur à combustion, le calculateur de gestion, sous dépendance des informations de disponibilité et des informations de restriction, est générateur d'ordres de commande d'une assistance mécanique à l'entraînement du rotor mû par le moteur à combustion. Une telle assistance est procurée à partir de la machine électrique réversible, qui sinon est rendue indisponible en cas prioritaire de besoin d'alimentation en énergie électrique du réseau de distribution. La machine électrique réversible et le réseau de distribution alimenté en énergie électrique à partir du réseau de gestion, sont alimentés en énergie électrique prioritairement par le générateur de courant sinon aussi par la réserve d'énergie électrique.
-) en phase de décélération du moteur à combustion, le calculateur de gestion, selon les besoins définis à partir des informations de commande, est générateur d'ordres de commande d'un prélèvement d'énergie mécanique à partir de la machine électrique réversible depuis le moteur à combustion et à partir du générateur de courant électrique depuis la chaîne cinématique. Sélectivement sous dépendance des informations de disponibilité et des informations de restriction, le calculateur de gestion est générateur d'ordres de commande d'une alimentation en énergie électrique prioritairement du réseau de distribution électrique sinon aussi de la réserve d'énergie électrique, à partir de la machine électrique réversible et à partir du générateur de courant électrique.

Il est compris que la dépendance sous laquelle est placé le calculateur de gestion vis-à-vis des informations de disponibilité et des informations de restrictions, est relative à des procédures préétablies d'alimentation en énergie considérées comme prioritaires ou subsidiaires en fonction des ressources en énergie électrique disponibles et des besoins individuels identifiés en énergie électrique des équipements du giravion. Les ressources en énergie électrique considérées comme disponibles sont susceptibles de prendre en compte une quantité d'énergie électrique de secours devant être maintenue. Une telle quantité d'énergie électrique de secours est notamment maintenue stockée dans la réserve d'énergie électrique, voire par analogie dans une réserve d'énergie électrique subsidiaire spécifiquement dédiée au maintien disponible de ladite quantité d'énergie électrique de secours.

Dans le cas où le giravion est bimoteur, l'architecture comprend un couple de dits groupes de motorisation d'entraînement d'une boîte de transmission de puissance commune. Le calculateur de gestion est en relation avec une dite interface de communication externe et avec au moins une interface de communication interne en relation avec les dites sources d'énergie électrique individuellement associées aux groupes de motorisation.

L'interface de communication interne est susceptible d'être unique pour l'ensemble des sources d'énergie électrique respectivement associées à chacun des groupes de motorisation. Pour des commodités d'implantation de l'architecture de distribution regroupant deux ensembles de gestion respectivement associés à chacun des groupe de motorisation d'un giravion bimoteur, un couple de dites interfaces de communication internes en communication avec le calculateur de gestion sont respectivement affectées à de dites sources d'énergie électrique que comportent individuellement des ensembles de gestion respectifs et similaires composant le réseau de gestion.

Plus particulièrement, le réseau de gestion comprend avantageusement un couple d'ensembles de gestion similaires respectivement affectés à l'un et l'autre des groupes de motorisation. Les ensembles de gestion sont interposés entre le réseau de distribution électrique et respectivement de dites sources d'énergie électrique affectées aux ensembles de gestion. Le réseau de gestion comprend un circuit d'interface entre les ensembles de gestion, le dit circuit d'interface étant muni d'un commutateur d'interface dont l'actionnement est commandé par le calculateur de gestion.

A partir d'une commande' de l'activation du commutateur d'interface, le calculateur de gestion régule avantageusement de manière sélective depuis l'une quelconque au moins des sources d'énergie électrique respectivement affectées à l'un et l'autre des ensembles de gestion, les alimentations en énergie électrique à travers l'un et l'autre des ensembles de gestion et vers le circuit de distribution sélectivement isolément ou en combinaison à partir de l'un et/ou l'autre des ensembles de gestion. Le calculateur de gestion régule aussi sélectivement les alimentations respectives en énergie électrique des sources d'énergie électrique en phase d'approvisionnement en énergie électrique qui sont respectivement affectées à l'un et l'autre des ensembles de gestion.

A partir d'une telle organisation de l'architecture de distribution, un premier moteur à combustion de l'un des groupes de motorisation ayant démarré, une situation de démarrage d'un deuxième moteur à combustion de l'autre groupe de motorisation est initiée à partir de la machine électrique réversible équipant le deuxième moteur à combustion. La machine électrique réversible est alimentée en énergie électrique sélectivement prioritairement à partir de l'une au moins des sources d'énergie électrique affectées à un premier ensemble de gestion associé au premier moteur à combustion, sinon aussi selon les informations de disponibilité relatives aux sources d'énergie électrique affectées au premier ensemble de gestion et selon les informations de restriction, à partir de la réserve d'énergie électrique d'un deuxième ensemble de gestion associé au deuxième moteur à combustion.

Dans le cas où le moteur à combustion est un turbomoteur associant un générateur de gaz et une turbine libre en prise sur la boîte de transmission de puissance, la machine électrique réversible est de préférence en prise sur le générateur de gaz et le générateur de courant électrique est de préférence en prise sur la boîte de transmission de puissance.

Selon une forme possible de réalisation pour un même ensemble de gestion, au moins un premier générateur de courant électrique est en prise sur la boîte de transmission de puissance, et au moins un deuxième générateur de courant électrique est en prise sur une source de puissance mécanique comprenant indifféremment un équipement entraîné en rotation à partir de la boîte de transmission de puissance et les dits moyens de transmission. Tel que visé plus haut, le deuxième générateur de courant électrique est susceptible d'être en prise pour son entraînement sur un quelconque organe en mouvement de ladite chaîne cinématique.

La réserve d'énergie électrique est en outre susceptible d'être avantageusement en relation avec au moins une source d'énergie électrique autonome, dont l'exploitation est placée sous la dépendance du calculateur de gestion. Par exemple, ladite source d'énergie autonome comprend indifféremment une source d'énergie à inertie, une pile à combustible, un dispositif à récupération d'énergie, un moteur thermodynamique et/ou un dispositif à capture d'énergie solaire.

Selon une forme préférée de réalisation, le calculateur de gestion est en relation avec des moyens de mesure de la tension électrique, de l'intensité du courant électrique et de la température du réseau de gestion, et avec des moyens d'affichage des informations correspondantes mesurées. De telles informations sont avantageusement à la disposition du pilote du giravion par l'intermédiaire des moyens d'affichage.

Des exemples de réalisation de la présente invention vont être décrits en relation avec les figures des planches annexées, dans lesquelles :
- la fig.1 est un schéma illustrant une architecture d'alimentation en puissance mécanique par énergie hybride d'au moins un rotor de giravion monomoteur, selon une forme de réalisation de la présente invention.
- la fig.2 est un schéma illustrant une forme de réalisation conforme à la présente invention, d'une architecture de distribution d'énergie électrique que comporte un réseau électrique de bord d'un giravion bimoteur.

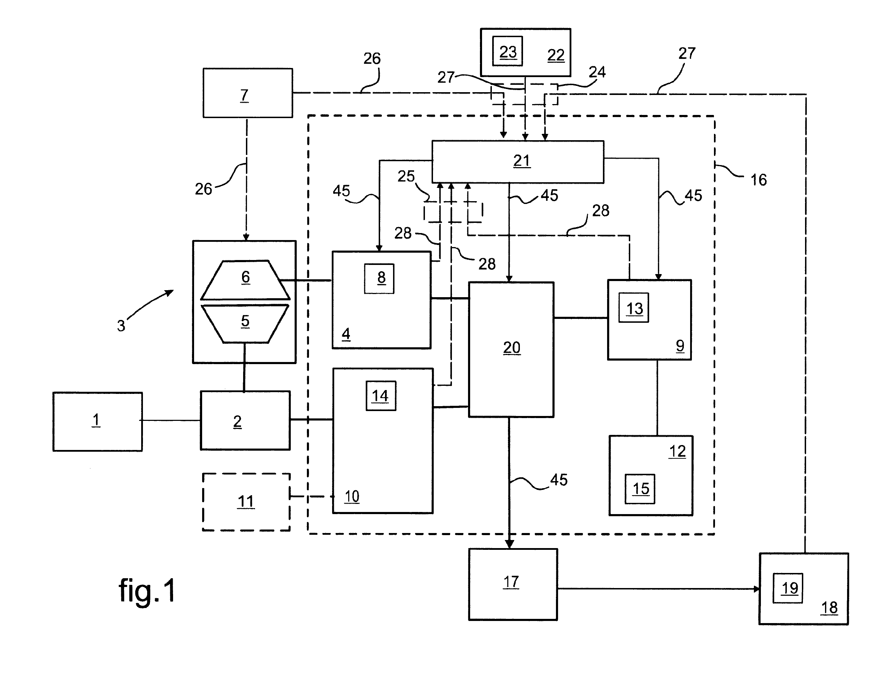

Sur la fig.1, un rotor 1 de giravion est entraîné en rotation à partir d'une boîte de transmission de puissance 2 mue au moyen de deux sources motrices mécaniques 3,4. Une première source motrice est formée d'un moteur à combustion 3, et plus particulièrement d'un turbomoteur comportant un générateur de gaz 6 d'entraînement en rotation d'une turbine libre 5 en prise sur la boîte de transmission de puissance 2. La deuxième source motrice est formée d'une machine électrique réversible 4 en prise sur le moteur à combustion 3, et plus particulièrement sur le générateur de gaz 6. Le moteur à combustion 3 et la machine électrique réversible 4 sont chacun équipés de moyens de régulation de leur fonctionnement, respectivement référencés 7 et 8.

Une réserve d'énergie électrique 9 est potentiellement alimentée en énergie électrique par la machine électrique réversible 4 et par un générateur de courant électrique 10 entraîné à partir de la boîte de transmission de puissance 2, ou à partir de toute autre source de puissance mécanique 11 du giravion. Accessoirement, la réserve d'énergie électrique 9 est en outre potentiellement alimentée en énergie à partir d'une source d'énergie électrique autonome 12. La réserve d'énergie électrique 9 et le générateur de courant électrique 10, voire encore préférentiellement la source d'énergie électrique autonome 12, sont chacun équipés de moyens de régulation de leur fonctionnement, respectivement référencés 13, 14 et 15.

Le giravion est équipé d'une interface homme-machine (IHM) 22 associée à des moyens de calcul de commande 23, par l'intermédiaire de laquelle interface homme-machine 22 le pilote agit sur divers organes du giravion pour en modifier le fonctionnement.

Le giravion est aussi équipé d'un réseau de bord, comportant une architecture de distribution 16 d'énergie électrique vers un réseau de distribution électrique 17, à partir duquel réseau de distribution électrique 17 les équipements 18 du giravion sont alimentés en énergie électrique. De tels équipements 18 sont potentiellement pourvus de moyens de régulation de leur fonctionnement.

L'architecture de distribution 16 comprend les différentes sources d'énergie électrique, notamment la machine électrique réversible 4, le générateur de courant électrique 10 et la réserve d'énergie électrique 9. L'architecture de distribution 16 comprend encore un réseau de gestion 20 mis en oeuvre par un calculateur de gestion 21. Le réseau de gestion 20 est interposé entre les différentes sources d'énergie électrique 4, 9, 10 d'une part, et le réseau de distribution électrique 17 d'autre part pour son approvisionnement en énergie électrique selon les besoins individuels des équipements 18.

Le calculateur de gestion 21 régule les alimentations en énergie électrique à travers le réseau de gestion 20 et vers le réseau de distribution électrique 17 depuis le réseau de gestion 20, en fonction des ressources en énergie électrique disponibles et en fonction des besoins en énergie du giravion. A cet effet, le calculateur de gestion 21 prend notamment en compte une progression sécurisée en vol du giravion, un maintien en ressource d'énergie électrique optimisée et une assistance mécanique occasionnellement procurée au moteur à combustion 3 par la machine électrique réversible 4 pour l'entraînement du rotor 1, selon les phases de vol du giravion et les conditions de fonctionnement du moteur à combustion 3.

Plus particulièrement, la régulation procurée par le calculateur de gestion 21 est placée sous la dépendance de diverses informations de gestion 26, 27, 28 transmises au calculateur de gestion 21. Les informations de gestion 26, 27, 28 sont notamment relatives au fonctionnement du moteur à combustion 3, au fonctionnement des sources d'énergie électrique 4, 9, 10 et aux besoins en énergie électrique du réseau de distribution électrique 17. Il est considéré des interfaces de communication entre le calculateur de gestion 21 et divers organes du giravion, réparties en interface de communication externe 24 et interface de communication interne 25.

L'interface de communication externe 24 est un moyen de mise en communication du calculateur de gestion 21 avec divers organes du giravion à partir desquels sont requis des besoins en énergie électrique depuis le réseau de distribution électrique 17. De telles requêtes en énergie sont notamment émises par les équipements 18 et/ou par l'interface homme-machine 22. L'interface de communication externe 24 est aussi un moyen de mise en communication du calculateur de gestion 21 avec les moyens de régulation 7 du fonctionnement du moteur à combustion 3. L'interface de communication interne 25 est un moyen de mise en communication du calculateur de gestion 21 avec les diverses sources d'énergie électrique que comporte l'architecture de distribution 16, notamment la machine électrique réversible 4, le générateur d'énergie électrique 10 et la réserve d'énergie électrique 9.

Le calculateur de gestion 21 est plus spécifiquement récepteur :
-) d'informations de commande 26 fournies par les moyens de régulation 7 du fonctionnement du moteur à combustion 3. Les informations de commande 26 sont des informations relatives notamment à l'état de vol du giravion et aux besoins en énergie mécanique du moteur à combustion 3.
-) d'informations de restriction 27 fournies par des moyens d'évaluation des besoins 19 en énergie électrique des équipements 18 à partir du réseau de distribution 17 et/ou fournies par les moyens de calcul de commande 23 associés à l'interface homme-machine 22.
-) d'informations de disponibilité 28 de ressource en énergie électrique, fournies par les sources d'énergie électrique 4, 9, 10.

A partir des informations de gestion 26, 27, 28, le calculateur de gestion émet des ordres de commande 45 régulant l'alimentation en énergie électrique du réseau de distribution 17 et du réseau de gestion 20, en fonction des situations de vol du giravion et des modalités de fonctionnement du moteur à combustion 3, tel qu'en situation de démarrage du rotor, en situation du giravion en vol de croisière, et en phase d'accélération et/ou en phase de décélération du moteur à combustion 3.

En mode conventionnel de fonctionnement du moteur à combustion 3, considéré en -l'absence d'assistance par la machine électrique réversible 4, l'architecture de distribution 16 permet de prélever de l'énergie mécanique sur le générateur de gaz 6 du moteur à combustion 3, voire encore sur de quelconques moyens de transmission que comprend la chaîne cinématique d'entraînement du rotor 1 à partir du moteur à combustion 3. L'énergie électrique prélevée est exploitée pour fournir de l'énergie électrique au réseau de distribution 17, ou pour optimiser le stockage et la disponibilité immédiate de l'énergie électrique produite.

La réserve d'énergie électrique 9 est susceptible d'être exploitée pour filtrer l'énergie électrique circulant dans le réseau de bord électrique du giravion, voire encore pour procurer une réserve permanente d'une quantité prédéterminée d'énergie électrique de secours en cas d'incapacité ou de pertes d'énergie normalement fournie par les sources productrices d'énergie électrique, machine électrique réversible 4 et générateur d'énergie électrique 10 plus spécifiquement. Le démarrage du ou des moteurs à combustion 3 peut être procuré au sol ou en vol en toute sécurité, en prenant en compte les besoins prioritaires voire indispensables du réseau de distribution 17. Les transferts de puissance d'énergie électrique peuvent être opérés en toute sécurité entre les différents organes électriques alimentés en énergie électrique par le réseau de bord du giravion.

En mode d'assistance du moteur à combustion 3 par la machine électrique réversible 4, une telle assistance est procurée par un apport d'énergie mécanique au moteur à combustion 3 depuis la machine électrique réversible 4, sous condition d'un maintien en vol sécurisé du giravion par une alimentation sélective en énergie électrique du réseau de distribution 17 selon les besoins prioritaires ou subsidiaires des équipements 18. L'assistance fournie par la machine électrique réversible 4 est déterminée à partir des moyens de régulation du fonctionnement du moteur à combustion 3, en fonction de l'énergie électrique disponible et des éventuels besoins en énergie à fournir au réseau de distribution 17.

L'architecture de distribution 16 procure une assistance mécanique transitoire au moteur à combustion 3, telle qu'en phase de démarrage ou d'accélération, sur toute sa gamme de vitesses de fonctionnement. Une telle assistance est obtenue en procurant une alimentation en énergie électrique du réseau de distribution 17, selon les besoins et en respectant les conditions de vol sécurisé du giravion. Une telle assistance est aussi susceptible d'être procurée à un ou plusieurs moteurs à combustion équipant le giravion, indifféremment de façon dissociée ou non de l'un à l'autre de ces moteurs à combustion 3 en pluralité.

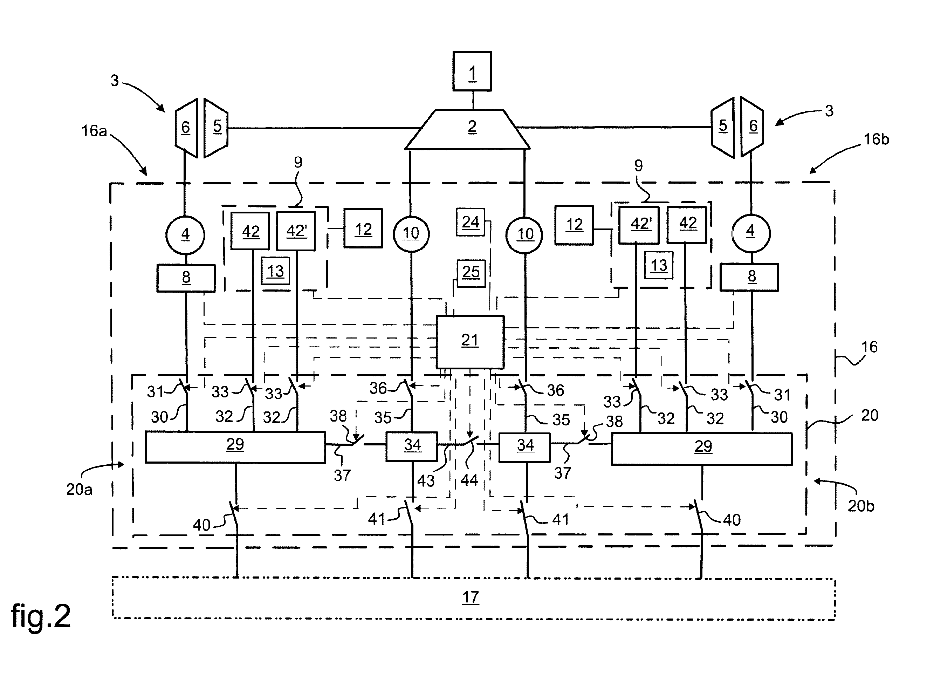

Par exemple sur la fig.2, une dite architecture de distribution 16 d'énergie électrique de puissance est implantée sur un giravion bimoteur. Il est transposé sur cette figure un couple d'architectures élémentaires d'alimentation en puissance mécanique par énergie hybride d'au moins un rotor de ce giravion bimoteur, telle qu'illustrée isolément sur la fig.1 pour un giravion monomoteur.

Tel que traditionnellement, la boite de transmission de puissance 2 est en prise sur chacun des moteurs à combustion 3 équipant le giravion pour l'entraînement du rotor 1.

Chaque moteur à combustion 3 est formé d'un turbomoteur associant un générateur de gaz 6 et une turbine libre 5. Pour chaque moteur à combustion 3, une machine électrique réversible 4 est en prise sur le générateur de gaz 6 et un générateur de courant 10 est en prise sur la boite de transmission de puissance 2, ou par analogie sur tout autre organe mécanique de puissance que comprend la chaîne cinématique d'entraînement du rotor 1 à partir de l'un et/ou l'autre des moteurs à combustion 3. Sur l'exemple de réalisation illustré, des générateurs de courant 10 en couple sont respectivement affectés à l'une et l'autre des architectures élémentaires. Selon une forme possible de réalisation, les générateurs de courant 10 respectivement affectés à l'une et l'autre des architectures élémentaires sont formés d'un même générateur de courant 10 commun. Un tel générateur de courant 10 commun est en prise sur la chaîne de transmission mécanique d'entraînement du rotor 1, notamment sur la boîte de transmission de puissance 2.

L'architecture de distribution 16 d'énergie électrique comprend un dit calculateur de gestion 21 en relation avec de dites interfaces de communication, respectivement interface de communication externe 24 et interface de communication interne 25. Un dit réseau de gestion 20 est interposé entre les sources d'énergie électrique 4, 9, 10 de l'architecture de distribution 16 et le réseau de distribution 17. L'architecture de distribution 16 est ségréguée en un couple d'architectures élémentaires analogues de distribution 16a, 16b d'énergie électrique de puissance, en relation avec le calculateur de gestion 21 qui est commun à l'une et à l'autre des architectures élémentaires de distribution 16a, 16b. Le réseau de gestion 20 est ségrégué en un couple d'ensembles de gestion 20a et 20b que comportent respectivement l'une et l'autre des architectures élémentaires de distribution 16a et 16b.

Les réseaux de bord indifféremment d'un giravion monomoteur ou d'un giravion bimoteur peuvent être équipés sans modification structurelle majeure d'une ou de plusieurs architectures élémentaires de distribution 16a et/ou 16b selon le nombre de moteurs à combustion 3 équipant le giravion. Tel que visé plus loin, des ensembles de gestion 20a et 20b associés à des moteurs à combustion 3 respectifs peuvent être aisément mis en relation entre eux par l'intermédiaire d'un circuit d'interface 43 interposé entre les ensembles de gestion 20a et 20b.

Il est compris selon une approche générale de l'invention, que le réseau de gestion 20 comporte au moins un dit ensemble de gestion 20a ou 20b. Dans le cas d'un giravion monomoteur, le réseau de gestion 20 comporte un seul ensemble de gestion 20a ou 20b. Dans le cas d'un giravion bimoteur, le réseau de gestion 20 est ségrégué en deux ensembles de gestion 20a et 20b respectivement associés à chacun des groupes de motorisation d'un tel giravion bimoteur, les dits ensembles de gestion étant avantageusement placés en relation entre eux par un dit circuit d'interface 43 et étant placés sous la dépendance d'un même calculateur de gestion 21.

Chacune des dites architectures élémentaires de distribution 16a et 16b comporte de dites sources d'énergie électrique, comprenant une dite machine électrique réversible 4, un dit générateur de courant électrique 10 et une dite réserve d'énergie électrique 9. Il est compris que chacune des sources d'énergie électrique 4, 9, 10 est équipée de dits moyens de régulation de leur fonctionnement, respectivement 8, 14 et 13.

Selon la forme de réalisation illustrée de la présente invention, le réseau de gestion 20 et plus particulièrement chacun des ensembles de gestion 20a et 20b comportent :
-) au moins une première interface de connexion 29 du réseau de gestion 20 avec un premier circuit d'alimentation électrique 30 à partir de la machine électrique réversible 4 muni d'un premier commutateur d'alimentation électrique 31, et avec un deuxième circuit d'alimentation électrique 32 à partir de la réserve d'énergie électrique 9 muni d'un deuxième commutateur d'alimentation électrique 33,
-) au moins une deuxième interface de connexion 34 du réseau de gestion 20 avec un troisième circuit d'alimentation électrique 35 à partir du générateur de courant électrique 10 muni d'un troisième commutateur d'alimentation électrique 36,
-) au moins un circuit de distribution sélective 37 d'alimentation électrique du réseau de gestion 20 interposé entre la première interface de connexion 29 et la deuxième interface de connexion 34, muni d'un commutateur de transfert 38 d'alimentation électrique,
-) au moins un premier commutateur de distribution électrique 40 interposé entre une dite première interface de connexion 29 et le réseau de distribution électrique 17,
-) au moins un deuxième commutateur de distribution électrique 41 interposé entre une dite deuxième interface de connexion 34 et le réseau de distribution électrique 17.

Le calculateur de gestion 21 est un régulateur de commande des actionnements sélectifs du premier commutateur d'alimentation électrique 31, du deuxième commutateur d'alimentation électrique 33, du troisième commutateur d'alimentation électrique 35, du commutateur de transfert 38 d'alimentation électrique, du premier commutateur de distribution 40 électrique et du deuxième commutateur de distribution 41 électrique.

La réserve d'énergie électrique 9 est susceptible de comprendre au moins deux réserves élémentaires 42, 42' d'énergie électrique distinctes, dont respectivement au moins une batterie 42 et au moins une super capacité 42'.

Dans ce cas, le deuxième circuit d'alimentation électrique 32 est de préférence subdivisé en au moins deux deuxièmes circuits élémentaires d'alimentation électrique d'alimentation électrique 32 du réseau de gestion 20. Une telle alimentation électrique du réseau de gestion 20 à partir des dits deux deuxièmes circuits élémentaires 32 est régulée par le calculateur de gestion 21 respectivement et sélectivement à partir de l'une et/ou l'autre des réserves élémentaires 42, 42' d'énergie électrique. Les circuits élémentaires d'alimentation électrique 32 sont notamment munis d'au moins deux deuxièmes commutateurs élémentaires d'alimentation électrique 33 respectifs, dont les actionnements individuels sont sélectivement commandés par le calculateur de gestion 21.

Le réseau de gestion 20 comprend avantageusement un circuit d'interface 43 entre les ensembles de gestion 20a et 20b, ledit circuit d'interface 43 étant muni d'un commutateur d'interface 44. L'actionnement du commutateur d'interface 44 est commandé à partir du calculateur de gestion 21, sélectivement avec les commutateurs que comprennent chacun des dits ensembles de gestion 20a et 20b. L'actionnement du commutateur d'interface 44 est effectué par le calculateur de gestion 21 selon les dites informations de restriction et les dites informations de disponibilité fournies par les sources d'énergie électrique 4, 9, 10 respectivement affectées à l'un et l'autre des ensembles de gestion 20a et 20b.

Selon la forme de réalisation illustrée de l'architecture d'alimentation en puissance mécanique par énergie hybride du rotor appliquée à un giravion bimoteur, le calculateur de gestion 21 est plus particulièrement régi selon les modes de régulation suivants :
-) En situation de démarrage d'un premier moteur à combustion 3, la machine électrique réversible 4 dont il est équipé entraîne le premier moteur à combustion 3. La machine électrique réversible 4 est dans ce cas alimentée en énergie électrique prioritairement par la réserve d'énergie électrique 9 de l'ensemble de gestion 20a ou 20b correspondant, sinon aussi par la réserve d'énergie électrique 9 affectée à l'autre ensemble de gestion 20b ou 20a.
-) Le premier moteur à combustion 3 ayant démarré et en situation de démarrage du deuxième moteur à combustion 3, la machine électrique réversible 4 dont il est équipé entraîne le deuxième moteur à combustion 3. La machine électrique réversible 4 équipant le deuxième moteur à combustion 3 est alimentée en énergie électrique sélectivement prioritairement à partir des sources d'énergie électrique 4, 9, 10 affectées à un premier ensemble de gestion 20a associé au premier moteur à combustion 3, sinon aussi selon les informations de disponibilité relatives aux sources d'énergie électrique 4, 9, 10 affectées au premier ensemble de gestion 20a, et selon les informations de restriction, à partir de la réserve d'énergie électrique 9 d'un deuxième ensemble de gestion 20b associé au deuxième moteur à combustion 3.

Puis, le premier moteur à combustion 3 et le deuxième moteur à combustion 3 ayant démarrés :
-) en situation de vol de croisière, le réseau de gestion 20 et les réserves d'énergie électrique 9, 4, 10 respectivement affectées à l'un et l'autre des ensembles de gestion 20a et 20b, sont alimentés en énergie électrique à partir des machines électriques réversibles 4 et à partir des générateurs de courant électrique 10. Les réserves d'énergie électrique 9 de l'un et l'autre des ensembles de gestion 20a et 20b sont exploitées pour filtrer l'énergie électrique circulant dans le réseau de bord.
-) en phase d'accélération des moteurs à combustion 3, le rotor 1 est conjointement entraîné par les moteurs à combustion 3 et par les machines électriques réversibles 4 respectivement affectés à l'un et l'autre des ensembles de gestion 20a et 20b. Le réseau de bord et les machines électriques réversibles 4 sont sélectivement alimentés en énergie électrique à partir des réserves d'énergie électrique 9 et des générateurs de courant électrique 10 respectivement affectés aux ensembles de gestion 20a et 20b, selon les informations de disponibilité propres à l'un et l'autre des ensembles de gestion 20a et 20b.
-) en phase de décélération des moteurs à combustion 3, un prélèvement d'énergie mécanique est opéré sélectivement à partir des machines électriques réversibles 4 et à partir des générateurs de courant électrique 10 de l'un et l'autre des ensembles de gestion 20a et 20b. Le réseau de distribution électrique 17 sinon aussi les réserves d'énergie électrique 9 sont prioritairement alimentés sélectivement à partir des machines électriques réversibles 4 et des générateurs de courant électrique 10 respectivement affectés aux ensembles de gestion 20a et 20b.

## Revendications

1. Architecture d'alimentation en puissance mécanique par énergie hybride d'un rotor (1) de giravion, associant au moins un moteur à combustion (3) équipé de moyens de régulation de son fonctionnement (7), avec au moins une machine électrique réversible (4) équipée de moyens de régulation de son fonctionnement (8), ladite architecture comportant :
-) une chaîne cinématique d'entraînement du rotor (1) depuis au moins un groupe de motorisation comprenant un dit moteur à combustion (3) en prise avec au moins une dite machine électrique réversible (4), la chaîne cinématique comprenant une boîte de transmission de puissance (2) en prise sur le rotor (1) et en prise sur le moteur à combustion (3) pour son entraînement,
-) au moins une réserve d'énergie électrique (9) alimentée en énergie électrique à partir de la machine électrique réversible (4) et à partir d'au moins un générateur de courant électrique (10) équipé de moyens de régulation de son fonctionnement (14), le générateur de courant électrique (10) étant entraîné en rotation à partir de la chaîne cinématique,
-) un réseau de bord électrique du giravion collectant et distribuant de l'énergie électrique depuis des sources d'énergie électrique comprenant au moins une dite machine électrique réversible (4), au moins un dit générateur de courant électrique (10) et au moins une dite réserve d'énergie électrique (9), le réseau de bord comprenant un réseau de distribution électrique (17) dédié à l'approvisionnement en énergie électrique d'équipements (18) du giravion,
-) une interface homme-machine (22) associée à des moyens de calcul de commande (23), par l'intermédiaire de laquelle interface homme-machine (22) un pilote agit sur des organes du giravion pour modifier leur fonctionnement, les dits organes du giravion comprenant au moins le groupe de motorisation et les dits équipements à approvisionner en énergie électrique,
**caractérisée en ce que** le réseau de bord comprend une architecture de distribution électrique (16) incluant lesdites sources d'énergie électrique (4,9,10), un réseau de gestion (20) et un calculateur de gestion (21), le réseau de gestion (20) étant distinct du réseau de distribution électrique (17) en étant interposé entre les sources d'énergie électrique (4,9,10) et le réseau de distribution électrique (17), la mise en oeuvre du réseau de gestion (20) étant placée sous la dépendance du dit calculateur de gestion (21) en relation avec des interfaces de communication (24,25) émettrices d'informations de gestion (26,27,28), à partir desquelles informations de gestion (26,27,28) le calculateur de gestion (21) met en oeuvre le réseau de gestion (20) en distribuant sélectivement l'énergie électrique fournie par les sources d'énergie électrique (4,9,10) à travers le réseau de gestion (20) et vers le réseau de distribution (17) depuis le réseau de gestion (20).

2. Architecture selon la revendication 1,
**caractérisée en ce que** le réseau de gestion (20) est mis en oeuvre par le calculateur de gestion (21) régulant des alimentations respectives en énergie électrique, d'une part à travers le réseau de gestion (20) et depuis le réseau de gestion (20) vers le réseau de distribution électrique (17), et d'autre part des sources d'énergie électrique en phase d'approvisionnement en énergie électrique comprenant au moins une dite machine électrique réversible (4) et au moins une dite réserve d'énergie électrique (9), le calculateur de gestion (21) opérant la dite régulation des alimentations en énergie électrique selon des informations de gestion convergeant vers le calculateur de gestion (21), les informations de gestion étant relatives au fonctionnement du moteur à combustion (3), au fonctionnement des sources d'énergie électrique (4,9,10) et au besoin en énergie électrique du réseau de distribution électrique (17).

3. Architecture selon l'une quelconque des revendications 1 et 2,
**caractérisée en ce que** les informations de gestion sont fournies au calculateur de gestion (21) par des interfaces de communication, respectivement interface de communication externe (24) et interface de communication interne (25), selon les modalités suivantes :
-) le calculateur de gestion (21) est en communication par l'interface de communication externe (24) au moins avec l'interface homme machine (22), avec les moyens de régulation (7) du moteur à combustion (3) générateurs d'informations de commande (26), et avec des moyens d'évaluation des besoins (19) en énergie électrique des équipements (18), lesdits moyens d'évaluation des besoins étant générateurs d'informations de restriction (27) relatives aux besoins en énergie électrique des équipements (18),
-) le calculateur de gestion (21) est en communication par l'interface de communication interne (25) au moins avec les moyens de régulation (14) du générateur de courant électrique (10), avec au moins les moyens de régulation (8) de la machine électrique réversible (4), sinon aussi avec des moyens de régulation (13) du fonctionnement de la réserve d'énergie électrique (9), les sources d'énergie électrique (4,10,9) étant génératrices d'informations de disponibilité (28) de ressource en énergie électrique.

4. Architecture selon l'une quelconque des revendications 1 à 3,
**caractérisée en ce qu'à** partir des informations de commande (26) relatives à la situation de vol et aux phases de vol du giravion, à partir d'informations de restriction (27) relatives aux besoins en énergie électrique du réseau de distribution (17) et à partir des informations de disponibilité (28) de ressource en énergie électrique, le calculateur de gestion (21) est régi selon les modes de régulation suivants :
-) en situation de démarrage du rotor (1), le calculateur de gestion (21) est générateur d'ordres de commande prioritairement d'un entraînement du moteur à combustion (3) par la machine électrique réversible (4) alimentée en énergie électrique à partir de la réserve d'énergie électrique (9), le réseau de gestion (20) étant exclusivement alimenté à partir de la réserve d'énergie électrique (9) si besoin soutenue sinon substituée par une alimentation électrique au sol extérieure au giravion,
-) en situation de vol de croisière, le calculateur de gestion (21) sous dépendance des informations de disponibilité (28) et des informations de restriction (27), est générateur d'ordres de commande d'une alimentation en énergie électrique prioritairement du réseau de distribution (17) et secondairement de la réserve d'énergie électrique (9) à partir de la machine électrique réversible (4) et à partir du générateur de courant (10), la réserve d'énergie électrique (9) étant exploitée pour filtrer l'énergie électrique circulant dans le réseau de bord,
-) en phase d'accélération du moteur à combustion (3), le calculateur de gestion (21) sous dépendance des informations de disponibilité (28) et des informations de restriction (27), est générateur d'ordres de commande d'une assistance mécanique à l'entraînement du rotor (1) mû par le moteur à combustion (3), à partir de la machine électrique réversible (4) sinon rendue indisponible en cas prioritaire de besoin d'alimentation en énergie électrique du réseau de distribution (17), le réseau de distribution (17) et la machine électrique réversible (4) étant alimentés en énergie électrique prioritairement par le générateur de courant (10) sinon aussi par la réserve d'énergie électrique (9),
-) en phase de décélération du moteur à combustion, le calculateur de gestion (21) selon les besoins définis à partir des informations de commande (26), est générateur d'ordres de commande d'un prélèvement d'énergie mécanique à partir de la machine électrique réversible (4) depuis le moteur à combustion (3) et à partir du générateur de courant électrique (10) depuis la chaîne cinématique, et sélectivement sous dépendance des informations de disponibilité (28) et des informations de restriction (27), est générateur d'ordres de commande d'une alimentation en énergie électrique à partir de la machine électrique réversible (4) et à partir du générateur de courant électrique (10), prioritairement du réseau de distribution électrique (17) sinon aussi de la réserve d'énergie électrique (9).

5. Architecture selon l'une quelconque des revendications 1 à 4,
**caractérisée en ce que** le réseau de gestion (20) comprend au moins un ensemble de gestion (20a, 20b) comportant :
-) au moins une première interface de connexion (29) du réseau de gestion (20) avec un premier circuit d'alimentation électrique (30) à partir de la machine électrique réversible (4) muni d'un premier commutateur d'alimentation électrique (31), et avec un deuxième circuit d'alimentation électrique (32) à partir de la réserve d'énergie électrique (4) muni d'un deuxième commutateur d'alimentation électrique (32),
-) au moins une deuxième interface de connexion (34) du réseau de gestion (20) avec un troisième circuit d'alimentation électrique (35) à partir du générateur de courant électrique (10) muni d'un troisième commutateur d'alimentation électrique (36),
-) au moins un circuit de distribution sélective (37) d'alimentation électrique du réseau de gestion (20) interposé entre la première interface de connexion (29) et la deuxième interface de connexion (34), muni d'un commutateur de transfert (38) d'alimentation électrique,
-) au moins un premier commutateur de distribution électrique (40) interposé entre une dite première interface de connexion (29) et le réseau de distribution électrique (17),
-) au moins un deuxième commutateur de distribution électrique (41) interposé entre une dite deuxième interface de connexion (34) et le réseau de distribution électrique (17), et
**en ce que** le calculateur de gestion (21) est un régulateur de commande des actionnements sélectifs du premier commutateur d'alimentation électrique (31), du deuxième commutateur d'alimentation électrique (33), du troisième commutateur d'alimentation électrique (35), du commutateur de transfert (38) d'alimentation électrique, du premier commutateur de distribution électrique (40) et du deuxième commutateur de distribution électrique (41).

6. Architecture selon l'une quelconque au moins des revendications 1 à 5,
**caractérisée en ce que** la réserve d'énergie électrique (9) comprend au moins deux réserves élémentaires d'énergie électrique distincte, dont respectivement au moins une batterie (42) et au moins une super capacité (42').

7. Architecture selon la revendication 6,
**caractérisée en ce que** le deuxième circuit d'alimentation électrique (32) est subdivisé en au moins deux deuxièmes circuits élémentaires d'alimentation électrique du réseau de gestion (20) respectivement et sélectivement à partir de l'une et l'autre des réserves élémentaires d'énergie électrique (42,42'), les circuits élémentaires d'alimentation électrique étant munis d'au moins deux deuxièmes commutateurs élémentaires d'alimentation électrique respectifs dont les actionnements individuels sont sélectivement commandés par le calculateur de gestion (21).

8. Architecture selon l'une quelconque au moins des revendications 1 à 7,
**caractérisée en ce que**, le giravion étant bimoteur et l'architecture comprenant un couple de dits groupes de motorisation d'entraînement d'une boîte de transmission de puissance (2) commune, le calculateur de gestion (21) est en relation avec une dite interface de communication externe (24) et avec au moins une interface de communication interne (25) en relation avec les dites sources d'énergie électrique (4,9,10) individuellement associées aux groupes de motorisation.

9. Architecture selon la revendication 8,
**caractérisée en ce que** le réseau de gestion (20) comprend un couple d'ensembles de gestion (20a, 20b) respectivement affectés à l'un et l'autre des groupes de motorisation, les ensembles de gestion (20a, 20b) étant interposés entre le réseau de distribution électrique (17) et respectivement de dites sources d'énergie électrique (4,9,10) affectées aux ensemble de gestion (20a, 20b), le réseau de gestion (20) comprenant un circuit d'interface (43) entre les ensembles de gestion (20a, 20b) muni d'un commutateur d'interface (44) dont l'actionnement est commandé à partir du calculateur de gestion (21), et,
**en ce que** le calculateur de gestion (21) régule par commande de l'activation du commutateur d'interface (44), sélectivement depuis l'une quelconque au moins des sources d'énergie électrique (4,9,10) respectivement affectées à l'un et l'autre des ensembles de gestion (20a, 20b), d'une part les alimentations en énergie électrique à travers l'un et l'autre des ensembles de gestion (20a, 20b) et vers le circuit de distribution (17) et d'autre part les alimentations respectives en énergie électrique des sources d'énergie électrique (4,9) en phase d'approvisionnement en énergie électrique, qui sont respectivement affectées à l'un et l'autre des ensembles de gestion (20a, 20b).

10. Architecture selon la revendication 9,
**caractérisée en ce qu'**en situation de démarrage d'un deuxième moteur à combustion (3), un premier moteur à combustion (3) ayant démarré, la machine électrique réversible (4) équipant le deuxième moteur à combustion (3) est alimentée en énergie électrique sélectivement prioritairement à partir de l'une au moins des sources d'énergie électrique (4,9,10) affectées à un premier ensemble de gestion (20a) associé au premier moteur à combustion (3) sinon aussi, selon les informations de disponibilité (28) relatives aux sources d'énergie électrique (4,9,10) affectées au premier ensemble de gestion (20a) et selon les informations de restriction (27), à partir de la réserve d'énergie électrique (9) d'un deuxième ensemble de gestion (20b) associé au deuxième moteur à combustion (3).

11. Architecture selon la revendication 3 et l'une quelconque des revendications 9 et 10,
**caractérisée en ce que** l'actionnement du commutateur d'interface (44) est commandé à partir du calculateur de gestion (21) sélectivement avec les commutateurs que comprennent chacun des dits ensembles de gestion (20a, 20b) selon les informations de restriction (27) et les informations de disponibilité (28) fournies par les sources d'énergie électrique (4,9,10) respectivement affectées à l'un et l'autre des ensembles de gestion (20a, 20b).

12. Architecture selon la revendication 11,
**caractérisée en ce que** le calculateur de gestion (21) est plus particulièrement régi selon les modes de régulation suivants :
-) en situation de démarrage d'un premier moteur à combustion (3), la machine électrique réversible (4) dont il est équipé entraîne le premier moteur à combustion (3) en étant alimentée en énergie électrique prioritairement par la réserve d'énergie électrique (9) de l'ensemble de gestion (20a,20b) correspondant, sinon aussi par la réserve d'énergie électrique (9) affectée à l'autre ensemble de gestion (20a, 20b), puis, le premier moteur à combustion (3) ayant démarré,
-) en situation de démarrage du deuxième moteur à combustion (3), la machine électrique réversible (4) dont il est équipé entraîne le deuxième moteur à combustion (3), en étant alimentée en énergie électrique sélectivement prioritairement à partir des sources d'énergie électrique (4,9,10) affectées à un premier ensemble de gestion (20a) associé au premier moteur à combustion (3) sinon aussi, selon les informations de disponibilité (28) relatives aux sources d'énergie électrique (4,9,10) affectées au premier ensemble de gestion (20a) et selon les informations de restriction (27), à partir de la réserve d'énergie électrique (4,9,10) d'un deuxième ensemble de gestion (20b) associé au deuxième moteur à combustion (3), puis, le premier moteur à combustion (3) et le deuxième moteur à combustion (3) ayant démarrés,
-) en situation de vol de croisière, le réseau de gestion (20) et les réserves d'énergie électrique (4,9,10) respectivement affectées à l'un et l'autre des ensembles de gestion (20a, 20b), sont alimentés en énergie électrique à partir des machines électriques réversibles (4) et à partir des générateurs de courant électrique (10), les réserves d'énergie électrique (4,9,10) de l'un et l'autre des ensembles de gestion (20a,20b) étant exploitées pour filtrer l'énergie électrique circulant dans le réseau de bord,
-) en phase d'accélération des moteurs à combustion (3), le rotor (1) est conjointement entraîné par les moteurs à combustion (3) et par les machines électriques réversibles (4) respectivement affectés à l'un et l'autre des ensembles de gestion (20a, 20b), le réseau de bord et les machines électriques réversibles (4) étant sélectivement alimentés en énergie électrique à partir des réserves d'énergie électrique (9) et des générateurs de courant électrique (10) respectivement affectés aux ensembles de gestion (20a, 20b) selon les informations de disponibilité (28) propres à l'un et l'autre des ensembles de gestion (20a, 20b),
-) en phase de décélération des moteurs à combustion (3), un prélèvement d'énergie mécanique est opéré sélectivement à partir des machines électriques réversibles (4) et à partir des générateurs de courant électrique (10) de l'un et l'autre des ensembles de gestion (20a, 20b), et prioritairement le réseau de distribution électrique (17) sinon aussi les réserves d'énergie électrique (9) sont alimentés sélectivement à partir des machines électriques réversibles (4) et des générateurs de courant électrique (10) respectivement affectés aux ensembles de gestion (20a, 20b).

13. Architecture selon l'une quelconque au moins des revendications 1 à 12,
**caractérisée en ce que** le moteur à combustion (3) étant un turbomoteur associant un générateur de gaz (6) et une turbine libre (5) en prise sur la boîte de transmission de puissance (2), la machine électrique réversible (4) est en prise sur le générateur de gaz (6) et le générateur de courant électrique (10) est en prise sur la boîte de transmission de puissance (2) pour leurs entraînements respectifs en rotation.

14. Architecture selon l'une quelconque au moins des revendications 1 à 13,
**caractérisée en ce qu'**au moins un premier générateur de courant électrique (10) est en prise sur la boîte de transmission de puissance (2) et **en ce qu'**au moins un deuxième générateur de courant (10) électrique est en prise sur une source de puissance mécanique comprenant indifféremment un équipement entraîné en rotation à partir de la boîte de transmission de puissance (2) et les dits moyens de transmission.

15. Architecture selon l'une quelconque au moins des revendications 1 à 14,
**caractérisée en ce que** la réserve d'énergie électrique (4) est en outre en relation avec au moins une source d'énergie électrique autonome (12) dont l'exploitation est placée sous la dépendance du calculateur de gestion (21), ladite source d'énergie autonome (12) comprenant indifféremment une source d'énergie à inertie, une pile à combustible, un dispositif à récupération d'énergie, un moteur thermodynamique et/ou un dispositif à capture d'énergie solaire.

16. Architecture selon l'une quelconque au moins des revendications 1 à 15,
**caractérisée en ce que** le calculateur de gestion (21) est en relation avec des moyens de mesure de la tension électrique, de l'intensité du courant électrique et de la température du réseau de gestion, et avec des moyens d'affichage des informations correspondantes mesurées.

## Patentansprüche

1. Aufbau einer Versorgung eines Rotors (1) eines Drehflügelflugzeugs mit mechanischer Leistung durch Hybridenergie, der mindestens einen mit Mitteln (7) zur Regelung seines Betriebs ausgerüsteten Verbrennungsmotor (3) mit mindestens einer mit Mitteln (8) zur Regelung ihres Betriebs ausgerüsteten, umwandelbaren elektrischen Maschine (4) verbindet, wobei der Aufbau aufweist:
-) einen Antriebsstrang des Rotors (1) ausgehend von mindestens einer Antriebseinheit, die einen besagten Verbrennungsmotor (3) aufweist, der mit mindestens einer der besagten umwandelbaren elektrischen Maschine (4) in Eingriff steht, wobei der Antriebsstrang ein Leistungsgetriebe (2) aufweist, das in Eingriff mit dem Rotor (4) und für dessen Antrieb in Eingriff mit dem Verbrennungsmotor (3) steht,
-) mindestens einen Speicher (9) elektrischer Energie, der ausgehend von der umwandelbaren elektrischen Maschine (4) und ausgehend von mindestens einem elektrischen Stromerzeuger (10), der mit Mitteln (14) zur Regelung seines Betriebs ausgerüstet ist, mit elektrischer Energie gespeist wird, wobei der elektrische Stromerzeuger (10) ausgehend von dem Antriebsstrang zu einer Drehbewegung angetrieben wird,
-) ein elektrisches Bordnetz des Drehflügelflugzeugs, welches elektrische Energie sammelt und verteilt, ausgehend von elektrischen Energiequellen, die mindestens eine besagte umwandelbare elektrische Maschine (4), mindestens einen besagten elektrischen Stromerzeuger (10) und mindestens einen besagten Speicher elektrischer Energie (9) aufweist, wobei das Bordnetz ein elektrisches Verteilungsnetz (17) aufweist, welches zur Versorgung der Ausrüstungen (18) des Drehflügelflugzeugs mit elektrischer Energie dient,
-) eine Mensch-Maschine-Schnittstelle (22), die mit Steuerungsberechnungsmitteln (23) verbunden ist, wobei über die Mensch-Maschine-Schnittstelle (22) ein Pilot auf die Organe des Drehflügelflugzeugs einwirkt, um deren Betrieb zu verändern, wobei die Organe des Drehflügelflugzeugs mindestens die Antriebseinheit und die besagten Ausrüstungen zur Versorgung mit elektrischer Energie umfassen,
**dadurch gekennzeichnet, dass** das Bordnetz einen Aufbau der elektrischen Verteilung (16) aufweist, der die besagten elektrischen Energiequellen (4, 9, 10), ein Steuerungssystem (20) und einen Steuerungsrechner (21) umfasst, wobei sich das Steuerungssystem (20) von dem elektrischen Verteilungsnetz (17) dadurch unterscheidet, dass es zwischen den elektrischen Energiequellen (4, 9, 10) und dem elektrischen Verteilungsnetz (17) angeordnet ist, wobei der Betrieb des Steuerungssystems (20) dem Steuerungsrechner (21) unterstellt ist, der in Beziehung mit Kommunikationsschnittstellen (24, 25) steht, die Steuerungsinformationen (26, 27, 28) aussenden, wobei ausgehend von diesen Steuerungsinformationen (26, 27, 28) der Steuerungsrechner (21) das Steuerungssystem (20) betreibt, indem er selektiv elektrische Energie, die von den elektrischen Energiequellen (4, 9, 10) geliefert wird, durch das Steuerungssystem (20) und ausgehend von dem Steuerungssystem (20) zum Verteilungsnetz (17) liefert.

2. Aufbau nach Anspruch 1,
**dadurch gekennzeichnet, dass** das Steuerungssystem (20) von dem Steuerungsrechner (21) betrieben wird, der entsprechende Versorgungen mit elektrischer Energie regelt, einerseits über das Steuerungssystem (20) und ausgehend von dem Steuerungssystem (20) zum elektrischen Verteilungsnetz (17), und andererseits über elektrische Energiequellen in Phasen einer Versorgung mit elektrischer Energie, die mindestens eine besagte umwandelbare elektrische Maschine (4) und mindestens eine besagte elektrische Energiequelle (9) umfassen, wobei der Steuerungsrechner (21) die besagte Regelung der elektrischen Energieversorgungen gemäß Steuerungsinformationen betreibt, die zum Steuerungsrechner (21) fließen, wobei sich die Steuerungsinformationen auf den Betrieb des Verbrennungsmotors (3), den Betrieb der elektrischen Energiequellen (4, 9, 10) und den Bedarf an elektrischer Energie des elektrischen Verteilungsnetzes (17) beziehen.

3. Aufbau nach einem der Ansprüche 1 und 2,
**dadurch gekennzeichnet, dass** die Steuerungsinformationen über Kommunikationsschnittstellen bzw. externe Kommunikationsschnittstellen (24) und interne Kommunikationsschnittstellen (25) gemäß den folgenden Richtlinien an den Steuerungsrechner (21) geliefert werden:
-) der Steuerungsrechner (21) steht über die externe Kommunikationsschnittstelle (24) mindestens mit der Mensch-Maschine-Schnittstelle (22), mit den Mitteln (7) zum Regeln des Verbrennungsmotors (3), mit Erzeugern (26) von Steuerinformationen und mit Mitteln (19) zur Berechnung des Bedarfs an elektrischer Energie von Ausrüstungen (18) in Verbindung, wobei die Mittel zur Berechnung des Bedarfs Erzeuger von Einschränkungsinformationen (27) bezüglich des Bedarfs elektrischer Energie der Ausrüstungen (18) sind,
-) der Steuerungsrechner (21) über die interne Kommunikationsschnittstelle (25) mindestens mit den Regelungsmitteln (14) des elektrischen Stromerzeugers (10), mit mindestens den Regelungsmitteln (8) der umwandelbaren elektrischen Maschine (4), andernfalls auch mit Regelungsmitteln (13) des Betriebs des elektrischen Energiespeichers (9), in Verbindung steht, wobei die elektrischen Energiequellen (4, 10, 9) Erzeuger (28) von Informationen über die Verfügbarkeit elektrischer Energiequellen sind.

4. Aufbau nach einem der Ansprüche 1 bis 3,
**dadurch gekennzeichnet, dass** ausgehend von Steuerinformationen (26) bezüglich der Flugsituation und Flugphasen des Drehflügelflugzeugs, ausgehend von Beschränkungsinformationen (27) bezüglich des Bedarfs an elektrischer Energie des Verteilungsnetzes (17) und ausgehend von Verfügbarkeitsinformationen (28) von elektrischen Energiequellen der Steuerungsrechner (21) gemäß der folgenden Regelungsmodi gelenkt wird:
-) in der Situation des Startens des Rotors (1) ist der Steuerungrechner (21) vorranging Erzeuger von Steuerbefehlen eines Antriebs des Verbrennungsmotors (3) durch die umwandelbare elektrische Maschine (4), die ausgehend von dem elektrischen Energiespeicher (9) mit elektrischer Energie versorgt wird, wobei das Steuerungssystem (20) ausschließlich ausgehend von dem elektrischen Energiespeicher (9) gespeist wird, im Bedarfsfall unterstützt, wenn nicht ersetzt, durch eine elektrische Versorgungseinheit am Boden außerhalb des Drehflügelflugzeugs,
-) in der Situation eines Reiseflugs ist der Steuerungsrechner (21) in Abhängigkeit von Verfügbarkeitsinformationen (28) und Beschränkungsinformationen (27) Erzeuger von Steuerbefehlen einer elektrischen Energieversorgung, vorranging des Verteilungsnetzes (17) und zweitranging des elektrischen Energiespeichers (9), ausgehend von der umwandelbaren elektrischen Maschine (4) und ausgehend von dem Stromerzeuger (10), wobei der elektrische Energiespeicher (9) genützt wird, um elektrische Energie zu filtern, die in dem Bordnetz zirkuliert,
-) in einer Beschleunigungsphase des Verbrennungsmotors (3) ist der Steuerungsrechner (21) in Abhängigkeit von Verfügbarkeitsinformationen (28) und Beschränkungsinformationen (27) Erzeuger von Steuerbefehlen einer mechanischen Unterstützung des Antriebs des Rotors (1), der von dem Verbrennungsmotor (3) bewegt wird, ausgehend von der umwandelbaren elektrischen Maschine (4), wenn diese nicht im vorrangigen Fall des Bedarf an einer elektrischen Energieversorgung des Verteilungsnetzes (17) unverfügbar wurde, wobei das Verteilungsnetz (17) und die umwandelbare elektrische Maschine (4) mit elektrischer Energie von dem Stromerzeuger (10), wenn nicht auch von dem elektrischen Energiespeicher (9), vorranging mit elektrischer Energie versorgt werden,
-) in einer Verlangsamungsphase des Verbrennungsmotors ist der Steuerungsrechner (21) gemäß dem Bedarf, der ausgehend von Steuerbefehlen (26) definiert ist, Erzeuger von Befehlen der Steuerung einer Entnahme von mechanischer Energie ausgehend von der umwandelbaren elektrischen Maschine (4) von dem Verbrennungsmotor (3), ausgehend von dem elektrischen Stromerzeuger (10) von dem Antriebsstrang und selektiv in Abhängigkeit von Verfügbarkeitsinformationen (28) und Beschränkungsinformationen (27), und ist Erzeuger von Steuerbefehlen einer Versorgung mit elektrischer Energie ausgehend von der umwandelbaren elektrischen Maschine (4) und ausgehend von dem elektrischen Stromerzeuger (10), vorranging des elektrischen Verteilungsnetzes (17), wenn nicht auch des elektrischen Energiespeichers (9).

5. Aufbau nach einem der Ansprüche 1 bis 4,
**dadurch gekennzeichnet, dass** das Steuerungssystem (20) mindestens eine Steuerungsgruppe (20a, 20b) aufweist mit:
-) mindestens einer ersten Verbindungsschnittstelle (29) des Steuerungssystems (20) mit einer ersten elektrischen Versorgungsschaltung (30) ausgehend von der umwandelbaren elektrischen Maschine (4), die mit einem ersten elektrischen Versorgungsschalter (31) versehen ist, und mit einer zweiten elektrischen Versorgungsschaltung (32) ausgehend von dem elektrischen Energiespeicher (4), der mit einem zweiten elektrischen Versorgungsschalter (32) versehen ist,
-) mindestens einer zweiten Verbindungsschnittstelle (34) des Steuerungssystems (20) mit einer dritten elektrischen Versorgungsschaltung (35) ausgehend von dem elektrischen Stromerzeuger (10), der mit einem dritten elektrischen Versorgungsschalter (36) versehen ist,
-) mindestens einer selektiven Verteilungsschaltung (37) zur elektrischen Versorgung des Steuerungssystems (20), der zwischen der ersten Verbindungsschnittstelle (29) und der zweiten Verbindungsschnittstelle (34) angeordnet ist und mit einem Schalter (38) zum Umschalten der elektrischen Versorgung versehen ist,
-) mindestens einem ersten elektrischen Verteilungsumschalter (40), der zwischen einer ersten Verbindungsschnittstelle (29) und dem elektrischen Verteilungsnetz (17) angeordnet ist,
-) mindestens einem zweiten elektrischen Verteilungsumschalter (41), der zwischen einer besagten zweiten Verbindungsschnittstelle (34) und dem elektrischen Verteilungsnetz (17) angeordnet ist, und
dadurch, dass der Steuerungsrechner (21) ein Steuerungsregler von selektiven Betätigungen des ersten elektrischen Versorgungsumschalters (31), des zweiten elektrischen Versorgungsumschalters (33), des dritten elektrischen Versorgungsumschalters (35), des Übertragungsumschalters (38) der elektrischen Versorgung, des ersten elektrischen Verteilungsumschalters (40) und des zweiten elektrischen Verteilungsumschalters (41) ist.

6. Aufbau nach mindestens einem der Ansprüche 1 bis 5,
**dadurch gekennzeichnet, dass** der elektrische Energiespeicher (9) mindestens zwei getrennte elektrische Elementarenergiespeicher aufweist, von denen jeweils mindestens einer eine Batterie (42) und mindestens einer ein leistungsstarker Kondensator (42') ist.

7. Aufbau nach Anspruch 6,
**dadurch gekennzeichnet, dass** die zweite elektrische Versorgungsschaltung (32) unterteilt ist in mindestens zwei zweite elektrische Versorgungselementarschaltungen des Steuerungssystems (20) und selektiv ausgehend von dem einen und dem anderen Elementarspeicher elektrischer Energie (42, 42') die elementaren elektrischen Versorgungsschaltungen mit mindestens zwei zweiten elektrischen Versorgungselementarumschaltem versehen sind, deren einzelne Betätigungen selektiv von dem Steuerungsrechner (21) gesteuert werden.

8. Aufbau nach mindestens einem der Ansprüche 1 bis 7,
**dadurch gekennzeichnet, dass** das Drehflügelflugzeug zwei Motoren aufweist, und der Aufbau ein Paar der besagten Antriebseinheiten für den Antrieb eines gemeinsamen Leistungsgetriebes (2) aufweist, wobei der Steuerungsrechner (21) in Verbindung mit einer besagten externen Kommunikationsschnittstelle (24) und mit mindestens einer internen Kommunikationsschnittstelle (25) steht, die in Verbindung mit den besagten elektrischen Energiequellen (4, 9, 10) stehen, die einzeln mit den Antriebseinheiten verbunden sind.

9. Aufbau nach Anspruch 8,
**dadurch gekennzeichnet, dass** das Steuerungssystem (20) ein Paar von Steuerungsgruppen (20a, 20b) aufweist, die jeweils zu der einen und der anderen Antriebseinheit gehören, wobei die Steuerungsgruppe (20a, 20b) zwischen dem elektrischen Verteilungsnetz (17) und jeweils den besagten elektrischen Energiequellen (4, 9, 10) angeordnet sind, die zu den Steuerungsgruppen (20a, 20b) gehören, wobei das Steuerungssystem (20) eine Schnittstellenschaltung (43) zwischen den Steuerungsgruppen (20a, 20b) aufweist, die mit einem Schnittstellenumschalter (44) versehen ist, dessen Betätigung von dem Steuerungsrechner (21) gesteuert wird, und dadurch, dass der Steuerungsschalter (21) durch Steuerung der Betätigung der Umschalterschnittstelle (44) selektiv ausgehend von mindestens einer der elektrischen Energiequellen (4, 9, 10), die jeweils zu der einen und der anderen Steuerungsgruppe (20a, 20b) gehören, einerseits die elektrischen Energieversorgungen über die eine oder die andere Steuerungsgruppe (20a, 20b) und zur Verteilungsschaltung (17), und andererseits die jeweiligen Versorgungen mit elektrischer Energie der elektrischen Energiequellen (4, 9), die jeweils der einen und der anderen Steuerungsgruppe (20a, 20b) gehören, in einer Phase der Aufnahme elektrischer Energie regelt.

10. Aufbau nach Anspruch 9,
**dadurch gekennzeichnet, dass** in der Situation des Startens eines zweiten Verbrennungsmotors (3), wobei ein erster Verbrennungsmotor (3) bereits gestartet ist, die umwandelbare elektrische Maschine (4), mit der der zweite Verbrennungsmotor (3) ausgerüstet ist, mit elektrischer Energie selektiv gespeist wird, vorranging ausgehend von mindestens einer der elektrischen Energiequellen (4, 9, 10), die zu einer ersten Steuerungsgruppe (20a) gehören, die mit dem ersten Verbrennungsmotor (3) verbunden sind, wenn nicht auch gemäß den Verfügbarkeitsinformationen (28) bezüglich der elektrischen Energiequellen (4, 9, 10), die zu der ersten Steuerungsgruppe (20a) gehören, und gemäß den Beschränkungsinforkationen (27) ausgehend von dem elektrischen Energiespeicher (9) einer zweiten Steuerungsgruppe (20b), die zu dem zweiten Verbrennungsmotor gehört.

11. Aufbau nach Anspruch 3 und einem der Ansprüche 9 und 10, **dadurch gekennzeichnet, dass** die Betätigung der Umschalterschnittstelle (44) ausgehend von dem Steuerungsrechner (21) selektiv gesteuert wird mit den Umschaltern, die jeder der Steuerungsgruppen (20a, 20b) aufweist, gemäß den Einschränkungsinformationen (27) und den Verfügbarkeitsinformationen (28), die von den elektrischen Energiequellen (4, 9, 10) geliefert werden, die jeweils zu der einen und der anderen Steuerungsgruppe (20a, 20b) gehören.

12. Aufbau nach Anspruch 11,
**dadurch gekennzeichnet, dass** der Steuerungsrechner (21) insbesondere gemäß der folgenden Regelungsmodi gelenkt wird:
-) in einer Situation des Startens eines ersten Verbrennungsmotors (3) treibt die umwandelbare elektrische Maschine (4), mit der er ausgerüstet ist, den ersten Verbrennungsmotor (3) an, wobei sie vorranging von dem elektrischen Energiespeicher (9) der entsprechenden Steuerungsgruppe (20a, 20b) gespeist wird, wenn nicht auch von dem elektrischen Energiespeicher (9), der zu der anderen Steuerungsgruppe (20a, 20b) gehört, worauf der erste Verbrennungsmotor (3) gestartet ist,
-) in der Situation des Startens des zweiten Verbrennungsmotors (3) treibt die zweite umwandelbare elektrische Maschine (4), mit der er ausgerüstet ist, den zweiten Verbrennungsmotor (3) an, wobei sie vorranging selektiv mit elektrischer Energie ausgehend von elektrischen Energiequellen (4, 9, 10) gespeist wird, die zu einer ersten Steuerungsgruppe (20a) gehören, die mit dem ersten Verbrennungsmotor (3) verbunden sind, wenn nicht auch gemäß Verfügbarkeitsinformationen (28) bezüglich elektrischer Energiequellen (4, 9, 10), die zu der ersten Steuerungsgruppe (20a) gehören, und gemäß Beschränkungsinformationen (27) ausgehend von dem elektrischen Energiespeicher (4, 9, 10) einer zweiten Steuerungsgruppe (20b), die zu dem zweiten Verbrennungsmotor (3) gehört, worauf der erste Verbrennungsmotor (3) und der zweite Verbrennungsmotor (3) gestartet sind,
-) in der Situation eines Reiseflugs werden das Steuerungssystem (20) und die elektrischen Energiespeicher (4, 9, 10), die jeweils zu der einen und der anderen Steuerungsgruppe (20a, 20b) gehören, mit elektrischer Energie gespeist ausgehend von den umwandelbaren elektrischen Maschinen (4) und ausgehend von elektrischen Stromerzeugern (10), wobei die elektrischen Stromspeicher (4, 9, 10) der einen und der anderen Steuerungsgruppe (20a, 20b) dazu benutzt werden, elektrische Energie zu filtern, die in dem Bordnetz zirkuliert,
-) in einer Beschleunigungsphase des Verbrennungsmotors (3) der Rotor (1) von den Verbrennungsmotoren (3) gemeinsam und von den umwandelbaren elektrischen Maschinen (4), die jeweils zu der einen und der anderen Steuerungsgruppe (20a, 20b) gehören, angetrieben wird, wobei das Bordnetz und die umwandelbaren elektrischen Maschinen (4) selektiv mit elektrischer Energie gespeist werden ausgehend von elektrischen Energiespeichern (9) und elektrischen Stromerzeugern (10), die jeweils zu Steuerungsgruppen (20a, 20b) gehören, gemäß Verfügbarkeitsinformationen (28), die der einen und der anderen Steuerungsgruppe (20a, 20b) eigen sind,
-) in einer Phase der Verlangsamung der Verbrennungsmotoren (3) eine Entnahme mechanischer Energie selektiv durchgeführt wird ausgehend von umwandelbaren elektrischen Maschinen (4) und ausgehend von elektrischen Stromerzeugern (10) der einen und der anderen Steuerungsgruppe (20a, 20b), und vorranging werden das elektrische Verteilungsnetz (17), wenn nicht auch die elektrischen Energiespeicher (9), selektiv ausgehend von den umwandelbaren elektrischen Maschinen (4) und elektrischen Stromerzeugern (10), die jeweils zu den Steuerungsgruppen (20a, 20b) gehören, gespeist.

13. Aufbau nach mindestens einem der Ansprüche 1 bis 12,
**dadurch gekennzeichnet, dass** der Verbrennungsmotor (3) ein Turbomotor mit einem Gaserzeuger (6) und einer Arbeitsturbine (5) ist, der in Eingriff mit dem Leistungsgetriebe (2) steht, wobei die umwandelbare elektrische Maschine in Eingriff mit dem Gaserzeuger (6) steht, und der elektrische Stromerzeuger (10) in Eingriff mit dem Leistungsgetriebe (2) für deren jeweiligen Antrieb zu einer Drehbewegung steht.

14. Aufbau nach mindestens einem der Ansprüche 1 bis 13,
**dadurch gekennzeichnet, dass** mindestens ein erster elektrischer Stromerzeuger (10) in Eingriff mit dem Leistungsgetriebe (2) steht, und dadurch, dass mindestens ein zweiter elektrischer Stromerzeuger (10) in Eingriff mit einer mechanischen Leistungsquelle steht, die unterschiedslos eine Ausrüstung aufweist, die zu einer Drehbewegung angetrieben wird ausgehend von dem Leistungsgetriebe (2) und den besagten Übertragungsmitteln.

15. Aufbau nach einem der Ansprüche 1 bis 14,
**dadurch gekennzeichnet, dass** der elektrische Energiespeicher (4) außerdem in Beziehung zu mindestens einer autonomen elektrischen Energiequelle (12) steht, deren Nutzung von dem Steuerungsrechner (21) abhängt, wobei die unabhängige Energiequelle (12) unterschiedslos eine Trägheitsenergiequelle, eine Brennstoffzelle, eine Vorrichtung zur Wiedergewinnung von Energie, einen thermodynamischen Motor und/oder eine Vorrichtung zum Aufnehmen von Solarenergie aufweist.

16. Aufbau nach mindestens einem der Ansprüche 1 bis 15,
**dadurch gekennzeichnet, dass** der Steuerungsrechner (21) mit Mitteln zum Messen der elektrischen Spannung, der elektrischen Stromstärke und der Temperatur des Steuerungssystems und mit Mitteln zum Anzeigen von entsprechenden gemessenen Informationen steht.

## Claims

1. Architecture for supplying mechanical power to a rotorcraft rotor (1) from hybrid energy, associating at least one combustion engine (3) equipped with means for regulating its operation (7) and at least one reversible electric machine (4) equipped with means for regulating its operation (8), said architecture comprising:
-) a drive train for driving the rotor (1) from at least one power plant comprising one said combustion engine (3) engaged with at least one said reversible electric machine (4), the drive train comprising a power transmission gearbox (2) engaged with the rotor (1) and engaged with the combustion engine (3) for its drive,
-) at least one electrical energy store (9) supplied with electrical energy from the reversible electric machine (4) and from at least one electric current generator (10) equipped with means for regulating its operation (14), the electric current generator (10) being driven in rotation from the drive train,
-) an on-board electrical network of the rotorcraft collecting and distributing electrical energy from electrical energy sources comprising at least one said reversible electric machine (4), at least one said electric current generator (10) and at least one said electrical energy store (9), the on-board network comprising an electrical distribution network (17) dedicated to supplying equipment (18) of the rotorcraft with electrical energy,
-) a man-machine interface (22) associated with control calculation means (23), via which man-machine interface (22) a pilot acts on members of the rotorcraft to modify their operation, said members of the rotorcraft comprising at least the power plant and said equipment to be supplied with electrical energy,
**characterised in that** the on-board network comprises an electrical distribution architecture (16) including said electrical energy sources (4,9,10), a management network (20) and a management computer (21), the management network (20) being distinct from the electrical distribution network (17) by being interposed between the electrical energy sources (4,9,10) and the electrical distribution network (17), the operation of the management network (20) being dependent on said management computer (21) in connection with communication interfaces (24,25) which issue management information (26,27,28), on the basis of which management information (26,27,28) the management computer (21) operates the management network (20) by selectively distributing the electrical energy delivered by the electrical energy sources (4,9,10) via the management network (20) and to the distribution network (17) from the management network (20).

2. Architecture according to claim 1,
**characterised in that** the management network (20) is operated by the management computer (21) regulating respective electrical energy supplies, on the one hand via the management network (20) and from the management network (20) to the electrical distribution network (17), and on the other hand from the electrical energy sources during a stage of supplying electrical energy comprising at least one said reversible electric machine (4) and at least one said electrical energy store (9), the management computer (21) performing said regulation of the electrical energy supplies on the basis of
management information converging on the management computer (21), the management information relating to the operation of the combustion engine (3), to the operation of the electrical energy sources (4,9,10) and to the electrical energy needs of the electrical distribution network (17).

3. Architecture according to any one of claims 1 and 2,
**characterised in that** the management information is delivered to the management computer (21) via communication interfaces, respectively an external communication interface (24) and an internal communication interface (25), according to the following modes:
-) the management computer (21) is in communication via the external communication interface (24) at least with the man-machine interface (22), with the means for regulating (7) the combustion engine (3) which generate control information (26), and with means for evaluating the electrical energy needs (19) of the equipment (18), said means for evaluating the needs being generators of restriction information (27) relating to the electrical energy needs of the equipment (18),
-) the management computer (21) is in communication via the internal communication interface (25) at least with the means for regulating (14) the electric current generator (10), with at least the means for regulating (8) the reversible electric machine (4), if not also with means for regulating (13) the operation of the electrical energy store (9), the electrical energy sources (4,10,9) being generators of availability information (28) about the electrical energy resource.

4. Architecture according to any one of claims 1 to 3, **characterised in that** on the basis of the control information (26) relating to the flight situation and to the stages of flight of the rotorcraft, on the basis of restriction information (27) relating to the electrical energy needs of the distribution network (17) and on the basis of the availability information (28) about the electrical energy resource, the management computer (21) is governed according to the following modes of regulation:
-) in a situation of starting the rotor (1), the management computer (21) generates control orders on a priority basis for driving the combustion engine (3) by the reversible electric machine (4) supplied with electrical energy from the electrical energy store (9), the management network (20) being supplied exclusively from the electrical energy store (9) if necessary supported or else substituted by an electrical supply on the ground and external to the rotorcraft,
-) in a situation of cruising flight, the management computer (21), depending on the availability information (28) and on the restriction information (27), generates control orders for supplying electrical energy on a priority basis to the distribution network (17) and on a subsidiary basis to the electrical energy store (9) from the reversible electric machine (4) and from the current generator (10), the electrical energy store (9) being used to filter the electrical energy flowing in the on-board network,
-) in a stage of acceleration of the combustion engine (3), the management computer (21), depending on the availability information (28) and on the restriction information (27), generates control orders for mechanical assistance in driving the rotor (1) driven by the combustion engine (3), from the reversible electric machine (4) unless it has been made unavailable on a priority basis because of the need to supply electrical energy to the distribution network (17), the distribution network (17) and the reversible electric machine (4) being supplied with electrical energy on a priority basis by the current generator (10) if not also by the electrical energy store (9),
-) in a stage of deceleration of the combustion engine, the management computer (21), depending on the needs defined by the control information (26), generates control orders for a withdrawal of mechanical energy from the combustion engine (3) by the reversible electric machine (4) and from the drive train by the electric current generator (10), and depending on the availability information (28) and on the restriction information (27), it selectively generates control orders for supplying electrical energy from the reversible electric machine (4) and from the electric current generator (10) on a priority basis to the electrical distribution network (17) if not also to the electrical energy store (9).

5. Architecture according to any one of claims 1 to 4,
**characterised in that** the management network (20) comprises at least one management assembly (20a, 20b) comprising:
-) at least one first connection interface (29) of the management network (20) with a first electrical supply circuit (30) from the reversible electric machine (4) provided with a first electrical supply switch (31), and with a second electrical supply circuit (32) from the electrical energy store (4) provided with a second electrical supply switch (32),
-) at least one second connection interface (34) of the management network (20) with a third electrical supply circuit (35) from the electric current generator (10) provided with a third electrical supply switch (36),
-) at least one selective distribution circuit (37) for electrical supply of the management network (20) interposed between the first connection interface (29) and the second connection interface (34), and provided with an electrical supply transfer switch (38),
-) at least one first electrical distribution switch (40) interposed between a said first connection interface (29) and the electrical distribution network (17),
-) at least one second electrical distribution switch (41) interposed between a said second connection interface (34) and the electrical distribution network (17), and
**in that** the management computer (21) is a regulator for controlling the selective actuations of the first electrical supply switch (31), the second electrical supply switch (33), the third electrical supply switch (35), the electrical supply transfer switch (38), the first electrical distribution switch (40) and the second electrical distribution switch (41).

6. Architecture according to any one at least of claims 1 to 5,
**characterised in that** the electrical energy store (9) comprises at least two distinct elementary electrical energy stores (9), comprising respectively at least one battery (42) and at least one supercapacitor (42').

7. Architecture according to claim 6,
**characterised in that** the second electrical supply circuit (32) is subdivided into at least two elementary second electrical supply circuits of the management network (20) respectively and selectively from each of the elementary electrical energy stores (42,42'), the elementary electrical supply circuits being provided with at least two respective second elementary electrical supply switches whose individual actuations are controlled selectively by the management computer (21).

8. Architecture according to any one at least of claims 1 to 7,
**characterised in that** the rotorcraft is a two-engined rotorcraft and the architecture comprises a pair of said power plants for driving a common power transmission gearbox (2), the management computer (21) being in connection with one said external communication interface (24) and with at least one internal communication interface (25) in connection with said electrical energy sources (4,9,10) individually associated with the power plants.

9. Architecture according to claim 8,
**characterised in that** the management network (20) comprises a pair of management assemblies (20a, 20b) respectively allocated to each of the power plants, the management assemblies (20a, 20b) being interposed between the electrical distribution network (17) and respectively said electrical energy sources (4,9,10) allocated to the management assemblies (20a, 20b), the management network (20) comprising an interface circuit (43) between the management assemblies (20a, 20b) provided with an interface switch (44) whose actuation is controlled by the management computer (21), and,
**in that**, by controlling the activation of the interface switch (44), selectively from any one at least of the electrical energy sources (4,9,10) respectively allocated to each of the management assemblies (20a, 20b), the management computer (21) regulates on the one hand the supplies of electrical energy via each of the management assemblies (20a, 20b) and to the distribution circuit (17), and on the other hand the respective supplies of electrical energy to the electrical energy sources (4,9) during a stage of supplying electrical energy, which are respectively allocated to each of the management assemblies (20a, 20b).

10. Architecture according to claim 9,
**characterised in that** in a situation of starting a second combustion engine (3), when a first combustion engine (3) has started, the reversible electric machine (4) with which the second combustion engine (3) is equipped is supplied with electrical energy selectively on a priority basis from at least one of the electrical energy sources (4,9,10) allocated to a first management assembly (20a) associated with the first combustion engine (3) if not also, depending on the availability information (28) relating to the electrical energy sources (4,9,10) allocated to the first management assembly (20a) and depending on the restriction information (27), from the electrical energy store (9) of a second management assembly (20b) associated with the second combustion engine (3).

11. Architecture according to claim 3 and any one of claims 9 and 10,
**characterised in that** the actuation of the interface switch (44) is controlled by the management computer (21) selectively with the switches included in each of said management assemblies (20a, 20b) depending on the restriction information (27) and on the availability information (28) delivered by the electrical energy sources (4,9,10) respectively allocated to each of the management assemblies (20a, 20b).

12. Architecture according to claim 11,
**characterised in that** the management computer (21) is more particularly governed according to the following modes of regulation:
-) in a situation of starting a first combustion engine (3), the reversible electric machine (4) with which it is equipped drives the first combustion engine (3) on being supplied with electrical energy on a priority basis by the electrical energy store (9) of the corresponding management assembly (20a,20b), if not also by the electrical energy store (9) allocated to the other management assembly (20a, 20b), and then, when the first combustion engine (3) has started,
-) in a situation of starting the second combustion engine (3), the reversible electric machine (4) with which it is equipped drives the second combustion engine (3) on being supplied with electrical energy selectively on a priority basis from the electrical energy sources (4,9,10) allocated to a first management assembly (20a) associated with the first combustion engine (3) if not also, depending on the availability information (28) relating to the electrical energy sources (4,9,10) allocated to the first management assembly (20a) and depending on the restriction information (27), from the electrical energy store (4,9,10) of a second management assembly (20b) associated with the second combustion engine (3), and then, when the first combustion engine (3) and the second combustion engine (3) have started,
-) in a situation of cruising flight, the management network (20) and the electrical energy stores (4,9,10) respectively allocated to each of the management assemblies (20a, 20b) are supplied with electrical energy from the reversible electric machines (4) and from the electric current generators (10), the electrical energy stores (4,9,10) of each of the management assemblies (20a,20b) being used to filter the electrical energy flowing in the on-board network,
-) in a stage of acceleration of the combustion engines (3), the rotor (1) is driven jointly by the combustion engines (3) and by the reversible electric machines (4) respectively allocated to each of the management assemblies (20a, 20b), the on-board network and the reversible electric machines (4) being selectively supplied with electrical energy from the electrical energy stores (9) and from the electric current generators (10) respectively allocated to the management assemblies (20a, 20b) depending on the availability information (28) specific to each of the management assemblies (20a, 20b),
-) in a stage of deceleration of the combustion engines (3), a withdrawal of mechanical energy is performed selectively by the reversible electric machines (4) and by the electric current generators (10) of each of the management assemblies (20a, 20b), and on a priority basis the electrical distribution network (17) if not also the electrical energy stores (9) are supplied selectively from the reversible electric machines (4) and from the electric current generators (10) respectively allocated to the management assemblies (20a, 20b).

13. Architecture according to any one at least of claims 1 to 12,
**characterised in that** the combustion engine (3) is a turbine engine associating a gas generator (6) and a free turbine (5) engaged with the power transmission gearbox (2), the reversible electric machine (4) being engaged with the gas generator (6) and the electric current generator (10) being engaged with the power transmission gearbox (2) for their respective driving in rotation.

14. Architecture according to any one at least of claims 1 to 13,
**characterised in that** at least a first electric current generator (10) is engaged with the power transmission gearbox (2) and **in that** at least a second electric current generator (10) is engaged with a mechanical power source comprising, equally well, equipment driven in rotation by the power transmission gearbox (2), and said transmission means.

15. Architecture according to any one at least of claims 1 to 14,
**characterised in that** the electrical energy store (4) is also in connection with at least one independent electrical energy source (12) which is operated under the control of the management computer (21), said independent energy source (12) comprising, equally well, an inertial energy source, a fuel cell, an energy recovery device, a thermodynamic engine and/or a solar energy capture device.

16. Architecture according to any one at least of claims 1 to 15,
**characterised in that** the management computer (21) is in connection with means for measuring the electric voltage, the intensity of the electric current and the temperature of the management network, and with means for displaying the corresponding measured information.
